# EUROPEAN PATENT SPECIFICATION

(11) **EP 3 498 462 B1**
(45) Date of publication and mention of the grant of the patent: **06.09.2023**
(21) Application number: 18210690.6
(22) Date of filing: 06.12.2018
(51) Int. Cl.: B29C 73/04, B64F 5/40, B29C 73/10

(54) **COMPOSITE REPAIR KIT**
REPARATURSATZ FÜR VERBUNDWERKSTOFFE
KIT DE RÉPARATION COMPOSITE

(30) Priority: 11.12.2017 US 201715838346
(43) Date of publication of application: 19.06.2019
(73) Proprietor: The Boeing Company, Arlington, VA 22202 (US)
(72) Inventor: GRIESS, Kenneth H, Chicago, IL Illinois 60606-2016 (US); GEORGESON, Gary E, Chicago, IL Illinois 60606-2016 (US)
(74) Representative: Boult Wade Tennant LLP

(56) References cited:
- EP-A1- 2 848 394
- EP-A1- 3 095 595
- US-A1- 2008 281 554
- US-A1- 2010 161 095
- US-A1- 2013 018 499
- US-B1- 9 082 209

## Description

### BACKGROUND

The present disclosure is related to methods and systems for repairing structures that include composite materials, and in particular, to methods and systems for effecting such repairs on aircraft with limited resources and time.

The use of structures constructed of composite materials have increased significantly in many areas including the aircraft industry. As used herein, composite material may refer to a material comprising fibers and a matrix. The fibers may be carbon fibers. The matrix may be a resin, for example a thermosetting resin. The fibers may be set within a resin matrix. The reason for this increase in use of structures constructed of composite materials includes the benefits of increased strength and rigidity, reduced weight, and the reduced number of parts per structure. However, with the increased use of structures constructed of composite materials (i.e., composite structures) comes the need to properly repair any damage to these types of structures. Specifically, large area composite repair is rapidly becoming an important support issue for aircraft that utilize composite structures. As an example, while small-sized damage to an aircraft fuselage may require scarfed repair, as damage size increases, other approaches are needed to the point that for large repairs, integration of the repair structure and the surrounding structure will require significant time to repair. Moreover, composite structures often require extensive repair work that may ground an aircraft for a significant amount of time that may be, for example, three or more weeks, thereby adding significantly to the support costs of the aircraft since the aircraft is taken out of operation.

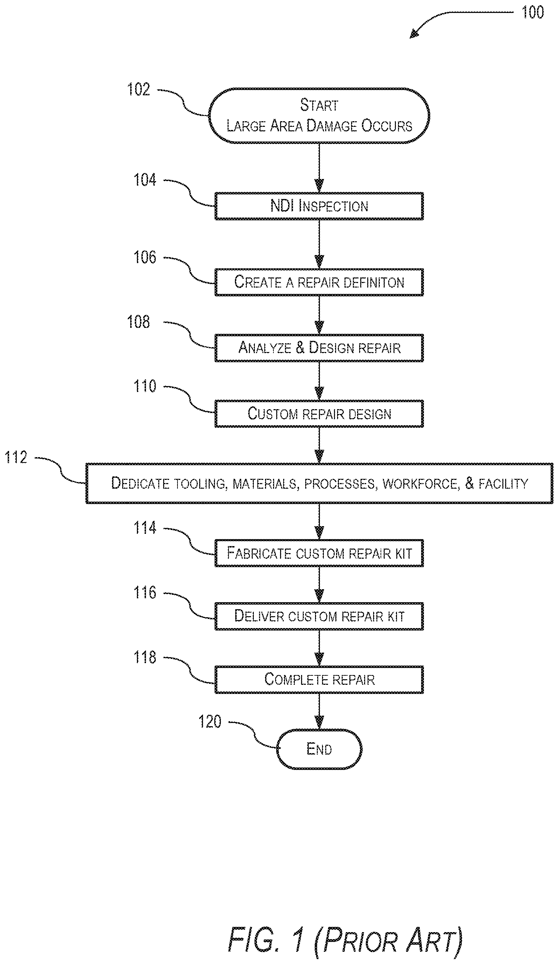

Generally, the current procedure for repairing large area damage on an aircraft utilizing composite materials is described in FIG. 1. In FIG. 1, a flowchart of a known method 100 is shown. The method 100 starts 102 when a large area of damage occurs on an aircraft. The known method 100 then includes non-destructive inspection ("NDI") of the damage to determine the size and location of the damage 104. The information is then typically passed to a commercial aviation services department of the manufacturer of the aircraft that determines what type of repair needs to be performed and then creates and sends a request (i.e., a repair definition) 106 to the support engineering department of the manufacturer to analyze the damage and design a custom repair kit 108. The support engineering department then designs a custom repair kit 110 and sends a request to the manufacturing department of the manufacturer to fabricate the custom repair kit. The manufacturing department then needs to dedicate tooling, materials, processes, workforce, and manufacturing facility space 112 to produce 114 the custom repair kit that may take, as an example, three or more weeks to complete. Once the custom repair kit is complete, it is shipped 116 to the location of the affected aircraft where aircraft-on-ground ("AOG") personal deliver and complete the repair on the aircraft 118. The method then ends 120. This known method is a time consuming and expensive process. As such, there is a need for a system and method that allows for repairing large area damage on aircraft with composite structures that is faster, more efficient, and less costly than the present approaches.

EP 3095595, in accordance with its abstract, states systems and processes for enabling an off-site expert to interact with an on-site technician during repair of composite structure. The off-site expert can provide real-time guidance to an on-site technician before and during the performance of repair procedures to avoid errors. The off-site expert is also able to monitor the repair procedures in real time to verify that correct procedures are being employed. In particular, the systems and processes disclosed can provide direct visual guidance, feedback, and out-of-plan warnings for manual or automated scarfing and other operations during repair of composite structure. The repair process combines optical three-dimensional surface measurement, illumination by at least one of visible, ultraviolet and infrared light, and digital light processing projection to provide step-by-step monitoring of the repair.

US 2010/161095, in accordance with its abstract, states the design for a repair of an area of a composite structure that is at least partially automated. Electronic data defining the boundaries of the area is used to calculate the boundaries of a cutout in the composite structure encompassing the area. Components used to repair the area are automatically designed based on the location of the cutout. Following removal of the cutout, the repair components are installed.

US 2008/281554, in accordance with its abstract, states a composite repair system and method for assisting in the repair of a cured composite part in which a damaged portion has been cut out and removed, exposing a plurality of composite plies and their corresponding composite ply edges. The composite repair system may comprise a light source to illuminate the ply edges, an image capturing device to obtain an image of the ply edges, and a computing device for processing the image of the ply edges and creating a map of the ply edges based on the image. The map may be used to manufacture filler plies having peripheral edges shaped to correspond with the composite ply edges for replacing the damaged portion of the composite part.

US 9082209, in accordance with its abstract, states a method and apparatus for reworking an inconsistency on a part. Image data for the inconsistency on the part may be identified using data for the part generated by a nondestructive evaluation system. Information about the inconsistency may be identified using the image data. Rework image data may be generated using the information identified about the inconsistency. The rework image data may comprise a number of patch images. The number of patch images may be projected onto a rework material for use in forming a patch for the inconsistency.

EP 2848394, in accordance with its abstract, states a method of repairing a defect in a skin of an aircraft wing made from a composite material. The wing has a stringer attached to an inner surface of the skin and the method comprises the steps of: cutting a section of stringer from the skin in the vicinity of the defect; positioning a repair plate on the inner surface over the defect so that it extends between opposing cut ends of the stringer; positioning a stringer repair part on the repair plate, the stringer repair part being of a length sufficient to overlap each cut end of the stringer; attaching the repair plate to the skin; and, attaching the stringer repair part to the stringer in a region of overlap at each cut end. Apparatus for repairing a wing is also described in EP2848394.

US 2013/018499, in accordance with its abstract, states a method comprising using a computer to access an engineering definition of a composite part and apply a set of rules governing material laydown prior to performing the laydown.

### SUMMARY

There is disclosed herein a method for repairing a damaged portion of a composite fuselage or wing on an aircraft, the method comprising: performing a non-destructive inspection ("NDI") of the damaged portion to determine a size and a location of the damaged portion; determining a repair for the damaged portion based on the size and location of the damaged portion and on types of previously fabricated nestable sections in a composite repair kit; and repairing the damaged portion with the composite repair kit; wherein each previously fabricated nestable section of the previously fabricated nestable sections in the composite repair kit is a single-ply of composite material that is fabricated prior to being included in the composite repair kit; and wherein the previously fabricated nestable sections are constructed to be stacked with each other to form varying multi-ply composite structures.

### BRIEF DESCRIPTION OF THE FIGURES

The method for repairing a damaged portion of a composite fuselage or wing on an aircraft may be better understood by referring to the following figures. The components in the figures are not necessarily to scale, emphasis instead being placed upon illustrating the relevant principles. In the figures, like reference numerals designate corresponding parts throughout the different views.
FIG. 1 is a flowchart of a known method for repairing large area damage on an aircraft utilizing composite materials.
FIG. 2 is a flowchart of an example of an implementation of a method for repairing a damaged portion of a composite fuselage or wing on an aircraft in accordance with the present disclosure.
FIG. 3A is an exploded assembly view of an example of an implementation of repair of a damaged portion in accordance with the present disclosure.
FIG. 3B is an assembly view of the example of the implementation of repair of the damaged portion, shown in FIG. 3A, in accordance with the present disclosure.
FIG. 3C is a zoomed-in exploded assembly view of the assembly view shown in FIGs. 3A and 3B in accordance with the present disclosure.
FIG. 4 is an exploded assembly view of the support stringer, first multi-ply composite hat-shaped section, and third multi-ply composite hat-shaped section, shown in FIG. 4, in accordance with the present disclosure.
FIG. 5 is a front assembly view of an example of an implementation of the nested combination, shown in FIG. 4, in accordance with the present disclosure.
FIG. 6A is a prospective assembly view of an example of another implementation of a repair of a damaged portion of an aircraft in accordance with the present disclosure.
FIG. 6B is an exploded prospective assembly view of the implementation of the repair of the damaged portion of an aircraft in accordance with the present disclosure.
FIG. 7A is a prospective assembly view of an example of another implementation of the repair of a damaged portion of an aircraft in accordance with the present disclosure.
FIG. 7B is an exploded assembly view of the implementation of the repair of the damaged portion, shown in FIG. 7A, in accordance with the present disclosure.
FIG. 7C is a cut-view of the exploded assembly of the implementation of the repair of the damaged portion, shown in FIGs. 7A and 7B, in accordance with the present disclosure.
FIG. 8 is a perspective view of an example of an implementation of a single-ply hat-shaped section in accordance with the present disclosure.
FIG. 9 is a perspective view of an example of another implementation of a single-ply hat-shaped section in accordance with the present disclosure.
FIG. 10 is a perspective view of an example of yet another implementation of a single-ply hat-shaped section in accordance with the present disclosure.
FIG. 11A is an assembly view of an example of an implementation of a multi-ply hat-shaped section in accordance with the present disclosure.
FIG. 11B is an exploded assembly of the implementation of the multi-ply hat-shaped section, shown in FIG. 11A, in accordance with the present disclosure.
FIG. 12A is an assembly view of an example of another implementation of a multi-ply hat-shaped section in accordance with the present disclosure.
FIG. 12B is an exploded assembly view of the implementation of a multi-ply hat-shaped section, shown in FIG. 12A, in accordance with the present disclosure.
FIG. 13 is an exploded assembly view of an example of an implementation of a multi-ply structural element in accordance with the present disclosure.
FIG. 14 is a zoomed in assembly view of the implementation of the multi-ply structural element, shown in FIG. 13, in accordance with the present disclosure.
FIG. 15 is an exploded assembly view of an example of another implementation of a multi-ply structural element in accordance with the present disclosure.

### DETAILED DESCRIPTION

A method for repairing a damaged portion of a composite fuselage or wing on an aircraft is disclosed. The method includes performing a non-destructive inspection ("NDI") of the damage portion to determine a size and a location of the damaged portion, determining a repair for the damaged portion based on the size and location of the damaged portion, and repairing the damaged portion with a composite repair kit.

Also disclosed is a composite repair kit for repairing the damaged portion of the composite fuselage or wing of the aircraft. The repair kit includes a plurality of nestable sections and adhesive. Each nestable section of the plurality of nestable sections is a single-ply of composite material and the plurality of nestable sections includes varying physical shapes to repair the damaged portion. Additionally, the nestable sections, of the plurality of nestable sections, are constructed to be stacked with each other to form different multi-ply composite structures. The adhesive is configured to attach a first nestable section of the plurality of nestable sections to a second nestable section of the plurality of nestable sections.

In general, the composite repair kit allows for rapid, low cost fabrication of repair components for repairs on composite structures on aircraft and, in particular, for large area composite repairs. By utilizing the composite repair kit, stack-ups (i.e., stacking) of nested sections (i.e. stack-ups of the nestable sections in a nested configuration thereby forming a stack-up of nested sections) may be utilized to bridge the boundary between existing structures in the aircraft and any new structures that are placed in the aircraft to repair the damaged portion of the fuselage or wing. The nestable sections are pre-cured layers of composite material. Additionally, the stack-up of the nested sections may also be utilized to add thickness and stiffness to existing damaged structures within the aircraft rather than having to replace the damaged structure entirely.

In this example, the nestable sections are pre-fabricated segmented composite laminate forms of pre-cured layers of material that may be rapidly and easily combined to produce splices between the repairs to the damaged portion and surrounding structure. Moreover, the nestable sections may be utilized to produce skin doublers, stringers, and repair splice plates as will be described later.

For purposes of this disclosure, each of the nestable sections may be a single-layered or a multi-layered composite laminate structure (also referred to, interchangeably, as a composite laminate form, a composite material, or a combined material) that was constructed from one or more layers of material. As such, in this disclosure, each nestable section may be constructed as a consolidation of one or more (for example up to six) layers of fiber and matrix composite lamina that is bonded together with adhesive and cured to form a "single-ply" of material prior to being included in the composite repair kit. While it is generally understood that the term "ply" and layer may be interchangeably used in the art, for purpose of ease of description in this disclosure, the term "ply" will be limited to describing a resulting layer of combined material that has been cured from one or more component layers of material that were first bonded and then cured into the resulting combined material, which is herein referred to as simply a "ply of material" even though the ply of material may include the one or more component layers of material that were bonded and cured together. Since these nestable sections are fabricated prior and then provided to the composite repair kit, the resulting nestable sections in the composite repair kit will appear to be structures that have a single layer of composite material that are configured to be retrieved from the composite repair kit and then stacked together to form the multi-layer structures that may later be bonded together and cured by an end-user (of the composite repair kit) to form the multi-layered structures. As such, from the perspective of the end-user, each of the nestable sections will appear to have a single layer of composite material even though that single layer may include multiple layers of component layers of material that form the single layer of composite material. Therefore, in this disclosure, a nestable section of a single layer of composite material will herein be referred to as a "single-ply" section and nestable sections that are combined into combined multi-layered nested sections will herein be referred to as a "multi-ply" section, since from the perspective of the end-user the plies will be based on the number of nestable sections that were retrieved from the composite repair kit and combined not the actual number of layers of fiber and matrix composite lamina that were originally utilized to produce the nestable sections prior to being supplied in the composite repair kit.

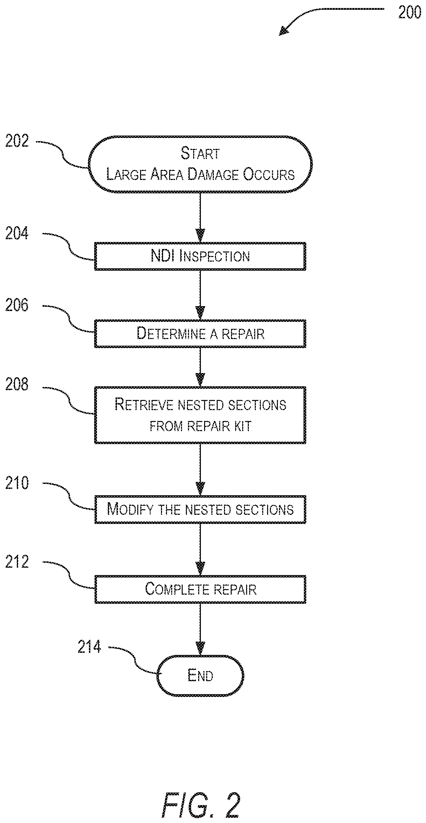

Specifically, in FIG. 2, a flowchart is shown of an example of an implementation of a method 200 for repairing a damaged portion of a composite fuselage or wing on an aircraft in accordance with the present disclosure. The method 200 starts 202 when a large area of damage occurs on the aircraft causing a damaged portion of the composite fuselage or wing on the aircraft. The method 200 then includes performing 204 a non-destructive inspection ("NDI") of the damage portion to determine a size and location of the damaged portion. A repair procedure and design are then determined 206 for the damaged portion based on the size and location of the damaged portion, the nestable sections are retrieved 208 from the composite repair kit, modified 210 if necessary, and the damaged portion is repaired 212 with the modified nestable sections from the composite repair kit. The method then ends 214.

In this example, determining a repair (i.e., a repair procedure and design) for repairing the damaged portion based on the size and location of the damaged portion may optionally include utilizing a commercial aviation services department (of the manufacturer of the aircraft) to determine what type of repair needs to be performed and then request that the support engineering department (of the manufacturer) analyzes the damaged portion and determine the repair procedure and design that is needed to properly repair the damaged portion. This repair procedure and design is determined, in part, based on the size and location of the damaged portion on the aircraft and on the types of nestable sections in the composite repair kit. Moreover, determining the repair includes analyzing the damaged portion and designing a repair solution for the damaged portion that utilizes the composite repair kit, where the composite repair kit includes a plurality of nestable sections and adhesive to attach different nestable sections together to form varying multi-ply composite structures.

Once the repair procedure and design has been determined, local technicians near the aircraft are able to: retrieve the necessary nestable sections from the composite repair kit; combine them into different multi-ply composite structures at the damaged portion of the aircraft utilizing the adhesive and other simple tools; cure the different multi-ply composite structures at the damaged portion (i.e., at the location of the damaged portion); and attach the different multi-ply composite structures at the damaged portion with either adhesive or bolts to complete the repair. The aircraft is then repaired and ready to enter service again.

As described earlier, the composite repair kit includes a plurality of nestable sections and adhesive. Each of the nestable sections are a single-ply of composite material and the composite repair kit includes different types of nestable sections having varying physical shapes to repair different types of potential damaged portions of aircrafts. In general, the nestable sections may include long narrow strips of single-ply material sheets of varying size and length, large area single-ply material sheets of varying size and length, curved flat single-ply material sheets of varying size and length, and single-ply hat-shaped sections of varying size and length. In this disclosure, each of the nestable sections are autoclave cured consolidated elements (i.e., parts) that may be bonded together to create various structural elements. By producing the nestable sections with an autoclave cure process prior to being supplied in the composite repair kit, the nestable sections are higher quality composite elements that may be bonded together with adhesive at the location of the damaged portion of the aircraft with simple adhesive curing techniques.

In this example, the large area single-ply material sheets may be utilized to produce the repair skin or, when stacked and bonded together, the multi-ply composite repair skin. The narrow strips of single-ply material sheets may be utilized to produce a flat doubler, a multi-ply composite doubler (when stacked and bonded together), a single-ply splice plate, or a multi-ply composite splice plate when stacked and bonded together. The curve flat single-ply material sheets may also be utilized to produce the flat doubler, a multi-ply composite doubler (when stacked and bonded together), a single-ply splice plate, or a multi-ply composite splice plate when stacked and bonded together. Moreover, the narrow strips of single-ply material sheets may also be utilized to produce various structural elements such as stringers that may be, for example, I-shaped stringers, Z-shaped stringers, C-shaped stringers, or L-shaped stringers. Furthermore, with the aid of simple tools and relief cuts, the narrow strips of single-ply material sheets may be formed into complex contours since the narrow strips of single-ply material sheets may be designed to be strong but flexible. Moreover, the single-ply hat-shaped sections, or when stacked and bonded together, the multi-ply composite hat-shaped section, may be utilized to strengthen, repair stringers, replace stringers, splice stringers, bridge a stringer, create stringer doublers, or attached to other that are pre-cured layers of composite material nestable or nested sections.

In aircraft, a stringer is generally a stiffening member that the skin of an aircraft is fastened to. In general, a stringer is: attached to a former (also known as frame) in a fuselage or to rib in a wing; a structural element that supports a section of the load carrying skin of the aircraft so as to prevent the skin from buckling under compression or shear loads; and primarily responsible for transferring the aerodynamic loads acting on the skin onto the frames or ribs of the aircraft. Based on the location and orientation of the stringer, the stringer may be referred to as a stringer or a longeron; however, for purposes of simplicity in this disclosure the term "stringer" will be utilized for both stringers and longerons. In general, stringers may be constructed of a strong and stiff material that is of acceptable weight and cost. Examples of the material utilized to construct stringers may include Aluminum 2024 T3, alloys of aluminum, steel, titanium, aluminum iron molybdenum zirconium, composite material such as carbon fiber and epoxy matrix resin, or other similar materials.

As an example, two or more nestable sections may be trimmed with heavy duty scissors (e.g., compound scissors), bonded, and stacked to form multi-ply nested sections that may be utilized to repair stringers, replace stringers, splice stringers, and create stringer doublers. In this example, the nestable sections are first trimmed and stacked (with adhesive), then cured in place (i.e., at the location of damaged portion) to ensure fit-up of the multi-ply nested section. Once the proper multi-ply nested section is created, the multi-ply nested section may be bolted or bonded in place. In general, by utilizing this approach, the resulting stepped sections in the damaged portion allow for good load paths.

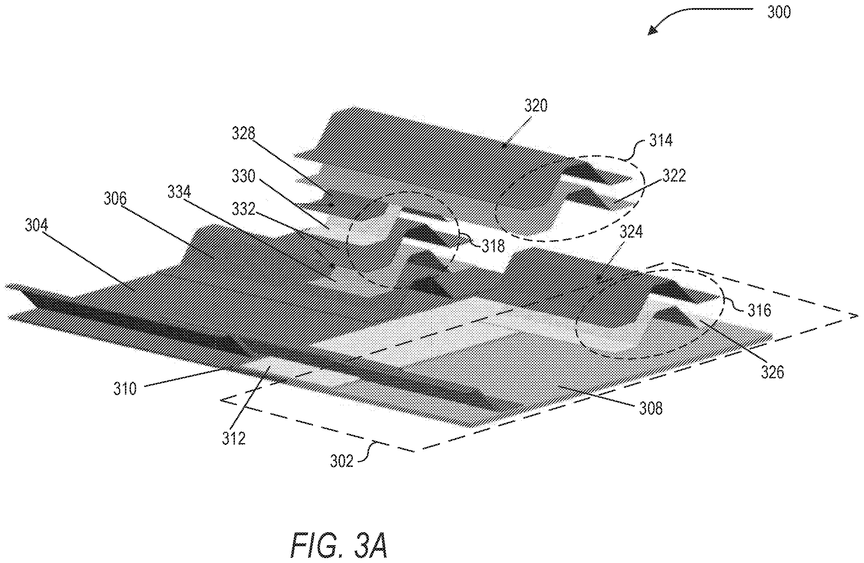

In FIG. 3A, an exploded assembly view of an example of an implementation of repair 300 of a damaged portion 302 is shown in accordance with the present disclosure. In this example, the damaged portion 302 includes a damaged section of a skin 304 of a composite fuselage or wing and a damaged section of a support stringer 306. The repair 300 of the damaged portion 302 includes placing at least one repair skin 308 over the damaged portion 302. The at least one repair skin 308 comprises one or more nestable sections that is one or more large area single-ply material sheets. In this example, the at least one repair skin 308 is shown placed internally over the damaged portion 302. The at least one repair skin 308 may be a multi-ply composite repair skin, where the multi-ply composite repair skin includes a stack-up of a plurality of repair skins to form the multi-ply composite repair skin, where the plurality of repair skins are bonded together with adhesive. The repair 300 also includes one or more flat doublers 310 constructed of one or more single-ply material sheets placed around a periphery of the at least one repair skin 308 in a staggered and stacked manner to match a thickness of the at least one repair skin 308 to a thickness of the damaged section of the skin 304 of the composite fuselage or wing within the damaged portion 302. In general, the flat doublers 310 are pre-cured laminates that include, for example, one to six plies thick of composite material. Usually, the flat doublers 310 will include two to three plies of material for ease of contouring and trimming. The one or more flat doublers 310 is at least one nestable or nested section that is a narrow strip of a single-ply material sheet. Moreover, the repair 300 also includes at least a single-ply splice plate 312 that is at least one nestable or nested section that is also a narrow strip of a single-ply material sheet 330 acting as a single-ply splice plate, where the at least a single-ply splice plate 312 is configured to splice (i.e., join) the at least one repair skin 308 to the skin 304 of the composite fuselage or wing. In this example, the one or more flat doublers 310 may be bonded to the skin 304 of the composite fuselage or wing and the at least a single splice plate 312 is attached to both the one or more flat doublers 310 and at least one repair skin 308 with either adhesive (i.e., bonded) or by mechanical means such as, for example, bolts. The repair 300 may also include a first multi-ply composite hat-shaped section 314 acting as a splice stringer, a second multi-ply composite hat-shaped section 316 acting a stringer doubler, and a third multi-ply composite hat-shaped section 318 acting as a restoration stringer. In this example, the first multi-ply composite hat-shaped section 314 may include two single-ply hat-shaped sections 320 and 322 bonded with adhesive, the second multi-ply composite hat-shaped section 316 may include a two single-ply hat-shaped sections 324 and 326 bonded with adhesive, and the third multi-ply composite hat-shaped section 318 may include a four single-ply hat-shaped sections 328, 330, 332, and 334 bonded with adhesive. The single-ply hat-shaped sections 320, 322, 324, 326, 328, 330, 332, and 334 are nestable sections of the composite repair kit.

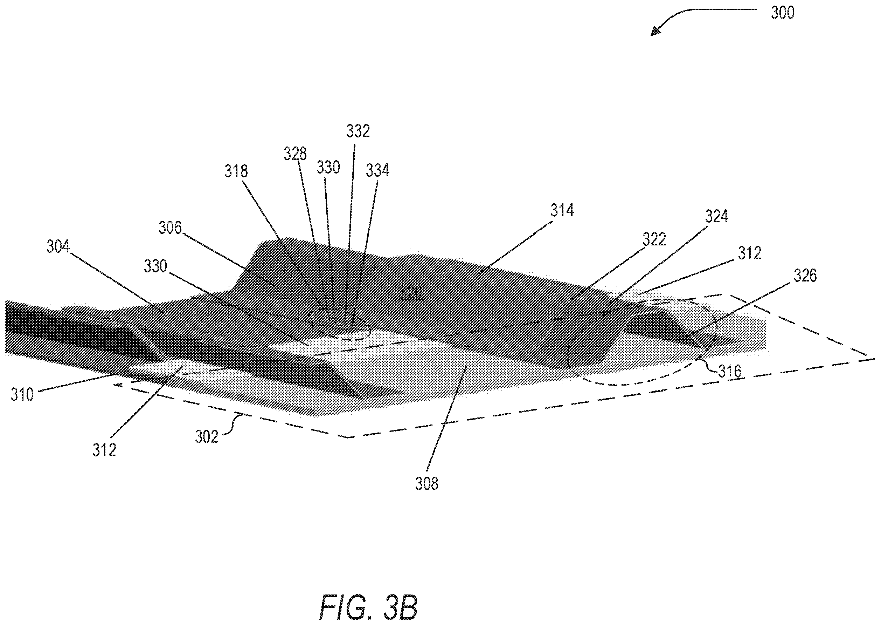

Turning to FIG. 3B, an assembled assembly view of the example of the implementation of repair 300 of the damaged portion 302 is shown in accordance with the present disclosure. While not shown for purposes of ease of illustration, the single-ply hat-shaped sections 320, 322, 324, 326, 328, 330, 332, and 334 may optionally be nested in a stepped fashion to allow for good load paths along the combined support stringer 306, first multi-ply composite hat-shaped section 314, and third multi-ply composite hat-shaped section 318. Moreover, the single-ply hat-shaped sections 320, 322, 324, 326, 328, 330, 332, and 334 may also be trimmed prior to being stacked up so as to produce the designed stack-up, such as, for example a stack-up that is nested in a stepped fashion.

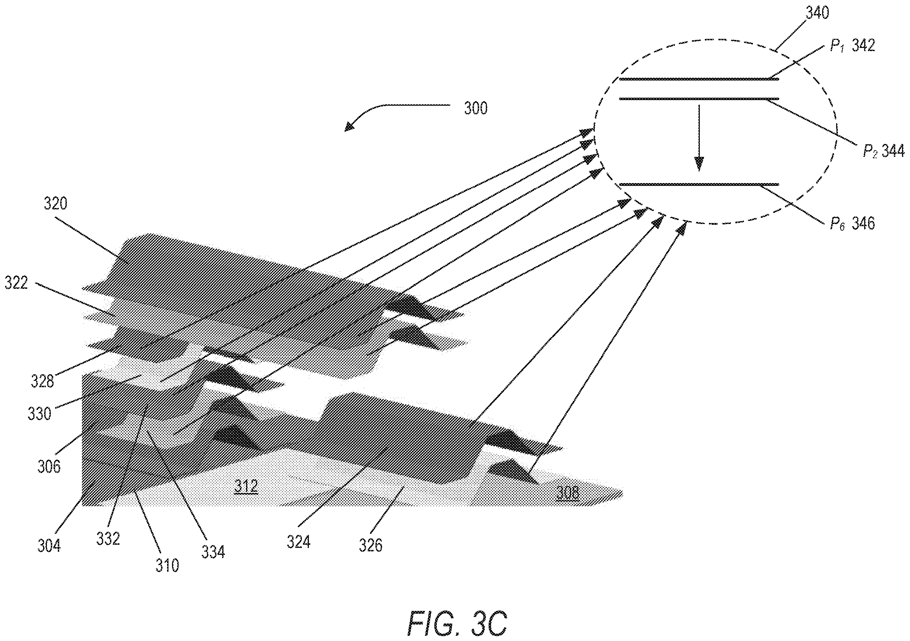

In FIG. 3C, a zoomed-in exploded assembly view is shown of the assembly view shown in FIGs. 3A and 3B in accordance with the present disclosure. In this example, each single-ply hat-shaped section 320, 322, 324, 326, 328, 330, 332, or 334 is shown to be themselves optionally multi-layer structures as shown by a layer assembly 340. As described earlier, for purposes of this disclosure the term "single-ply" means that the structure (i.e., a hat-shaped section or flat section) of the nestable section is a single layer of composite material that was previously fabricated prior to being included in the composite repair kit and that may be stacked up and nested with other similar types of pre-cured structures to form a multi-layer structure that will be referred to a being "multi-ply." As such, the term single-ply as used herein is not limited to the actual number of layers of material that were originally utilized (i.e., in the pre-cure process of fabrication) to produce the actual single-ply structure. As such, in this example, each single-ply hat-shaped section 320, 322, 324, 326, 328, 330, 332, or 334 may be constructed of a single layer of material (if it has suitable material and mechanical properties) or it may include between two to six, or more, layers of material shown in the layer assembly 340 as layers *P₁* 342, *P₂* 344, through *P₃* 346. Again, as described earlier, these layers are fabricated (including being cured in the fabrication process) prior to being provided to the composite repair kit to form the "single-ply" section that may then be combined with other "single-ply" sections to form "multi-ply" sections, where the term "ply," in this disclosure, refers (from the perspective of the end-user) to the resulting composite layer of material that was previously fabricated and then provided to the composite repair kit. As such, the term "ply" refers to the layers utilized and combined by the end-user of the composite repair kit and is not limited to the actual number of layers of material utilized to produce a given nested section (in the original fabrication process prior to being provided to the composite repair kit) that is utilized by the end-user. In this example, each single-ply hat-shaped section 320, 322, 324, 326, 328, 330, 332, or 334 may be fabricated (prior to being provided to the composite repair kit) as a consolidation of one to six layer (i.e., plies) of a fiber and matrix composite lamina such as, for example, a BMS 8-276 material (produced by The Boeing Company of Chicago, IL) and 6K-70-PW (a pre-impregnated "pre-preg" carbon fabric).

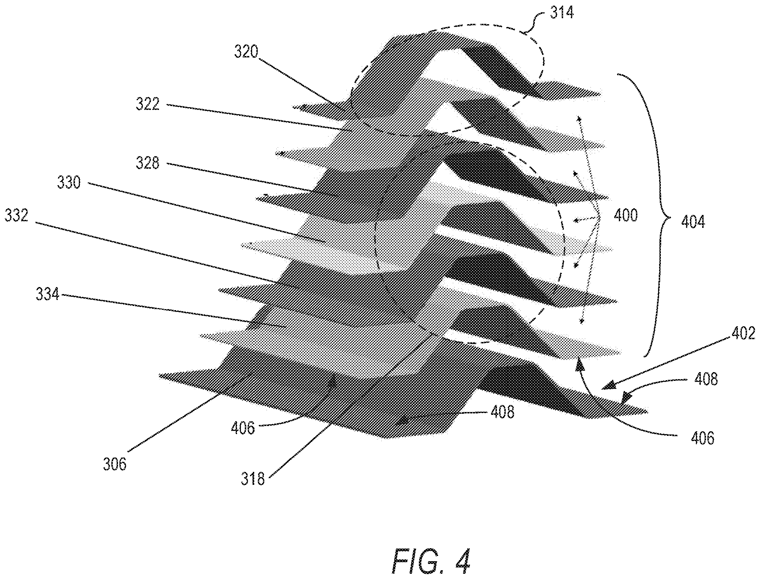

In FIG. 4, an exploded assembly view of the support stringer 306, first multi-ply composite hat-shaped section 314, and third multi-ply composite hat-shaped section 318 are shown in accordance with the present disclosure. In this example, all of the single-ply hat-shaped sections 320, 322, 324, 326, 328, 330, 332, and 334 are shown as being bonded together with adhesive 400 placed between the single-ply hat-shaped sections 320, 322, 328, 330, 332, and 334. The combination (i.e., the nested combination 404) of all the single-ply hat-shaped sections 320, 322, 328, 330, 332, and 334 are then cured together at the damaged portion 302 utilizing known portable heating and curing techniques. The nested combination 404 is cured in place to ensure proper fit-up on the support stringer 306 and second multi-ply composite hat-shaped section 316 and/or at least one repair skin 308. In this example, the adhesive 400 may be a film adhesive. In this example, a release film may be placed between the bottom 406 of the nested combination 404 at the bottom single-ply hat-shaped section 334 and the top surface 408 of the support stringer 306. The release film allows for removal and trimming after cure. Once removed and trimmed, the nested combination 404 may be stacked on top of the support stringer 306 and either bonded in place or bolted. It is appreciated by those of ordinary skill in the art that the single-ply hat-shaped sections 320, 322, 328, 330, 332, and 334 are not drawn to scale in FIG. 4 for the purpose of illustration and that the relative lengths of the individual single-ply hat-shaped sections 320, 322, 328, 330, 332, and 334 may vary or may be as shown in FIGs. 3A and 3B.

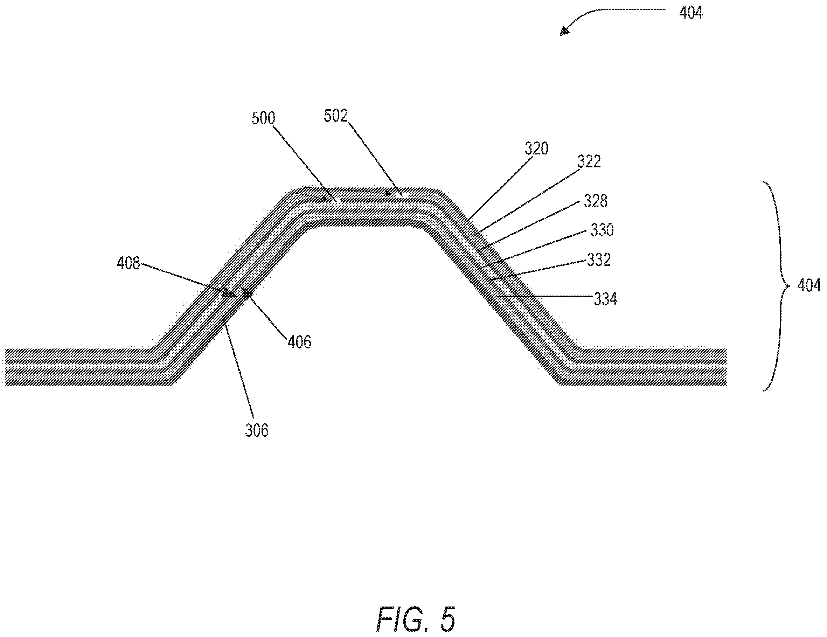

In FIG. 5, a front assembly view of an example of an implementation of the nested combination 404 is shown in accordance with the present disclosure. In this example in order to enable section use flexibility, some of the single-ply hat-shaped sections may be split at the top to allow for proper nesting. In general, the composite repair kit may include nestable sections that are single-ply hat-shaped sections of varying sizes; however, in some situations it is necessary to attempt to nest two single-ply hat-shaped sections of the same size. As an example, a first split 500 is shown in the single-ply hat-shaped section 328 of the third multi-ply composite hat-shaped section 318 and a second split 502 is shown in the single-ply hat-shaped section 322 of the second multi-ply composite hat-shaped section 316. In this example, the single-ply hat-shaped sections 322 and 328 may be the same shape and size of the single-ply hat-shaped sections 330 such that the first split 500 and the second split 502 allow both the single-ply hat-shaped sections 322 and 328 to fit and be nested between the single-ply hat-shaped sections 320 and 330. In this example, to ensure acceptable bonding surfaces in the field, a peal-ply may be added to each surface of the single-ply hat-shaped sections 320, 322, 328, 330, 332, and 334 and removed prior to bonding.

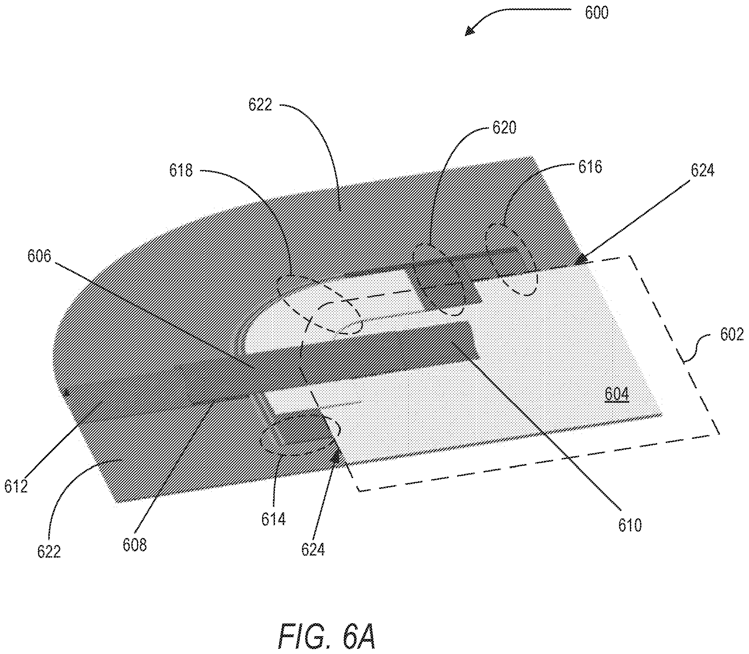

FIG. 6A is a prospective assembly view of an example of another implementation of a repair 600 of a damaged portion 602 of an aircraft in accordance with the present disclosure. In this example, the repair 600 includes an at least one repair skin 604, a first multi-ply composite hat-shaped section 606 acting as a splice stringer, a second multi-ply composite hat-shaped section 608 acting a stringer doubler, and a third multi-ply composite hat-shaped section 610 acting as a restoration stringer. In this example, the first multi-ply composite hat-shaped section 606 and the second multi-ply composite hat-shaped section 608 are located on a support stringer 612 and the first multi-ply composite hat-shaped section 606 and third multi-ply composite hat-shaped section 610 are located on the at least one repair skin 604. Moreover, the repair 600 also includes a first multi-ply composite doubler 614, a second multi-ply composite doubler 616, a first multi-ply composite splice plate 618, and a second multi-ply composite splice plate 620. The first multi-ply composite doubler 614 and second multi-ply composite doubler 616, as discussed earlier, are constructed from a plurality of flat doublers stacked up in a staggered fashion for load introduction, which are bonded together with adhesive. The bottoms of the first multi-ply composite doubler 614 and second multi-ply composite doubler 616 are then bonded to the surface of a skin 622 of a composite fuselage or wing. In this example, the first multi-ply composite doubler 614 is a curved structure as is the first multi-ply composite splice plate 618. Both the first multi-ply composite doubler 614 and second multi-ply composite doubler 616 is placed around the periphery 624 of the at least one repair skin 604 in a staggered and stacked manner to match a thickness of the at least one repair skin 604 to a thickness of the damaged section of the skin 622 of the composite fuselage or wing within the damaged portion 602. The first multi-ply composite doubler 614 and second multi-ply composite doubler 616 may be bonded together in a staggered fashion.

In this example, it is appreciated by those of ordinary skill in the art that the first multi-ply composite doubler 614 and second multi-ply composite doubler 616 and flat doublers in general may have direction specific properties (i.e., modulus) to allow for specific direction and orientation related uses. As seen in FIG. 6A, the first multi-ply composite doubler 614 and second multi-ply composite doubler 616 are flat and curved to properly match the periphery 624 of the at least one repair skin 604. As such, some of the multi-ply composite doublers and flat doublers are flat and round (i.e., curved) in different directions so as to be able to properly clock/orient the multi-ply composite doublers or flat doublers in the proper position to repair the damaged portion 602.

The first multi-ply composite splice plate 618 and the second multi-ply composite splice plate 620 and placed on top of both the first multi-ply composite doubler 614 and second multi-ply composite doubler 616 and below the first multi-ply composite hat-shaped section 606. In this example, the first multi-ply composite splice plate 618 is also a curved structure. The first multi-ply composite splice plate 618 and the second multi-ply composite splice plate 620 may be bonded together in a staggered fashion and either bonded or fastened by bolts to the first multi-ply composite doubler 614, second multi-ply composite doubler 616, and the at least one repair skin 604.

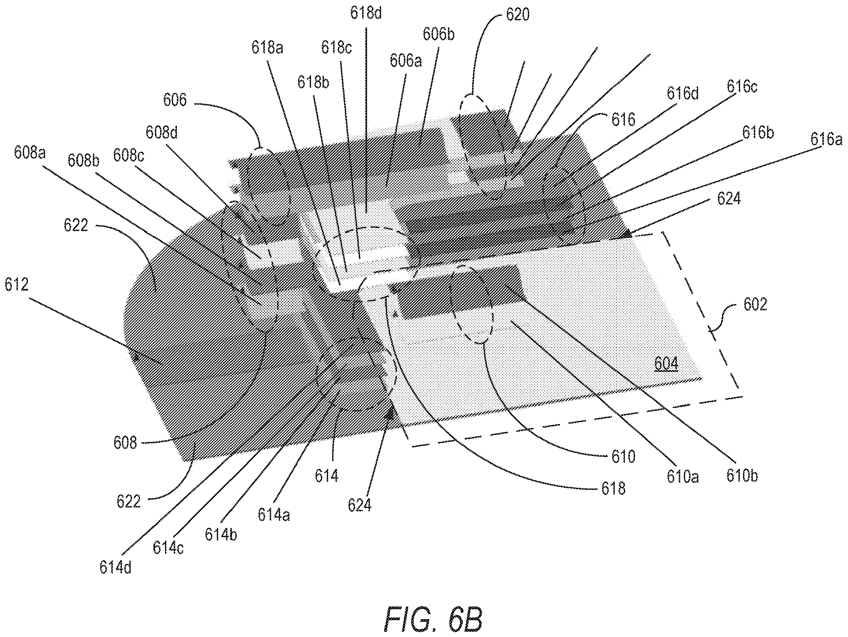

Turning to FIG. 6B, an exploded prospective assembly view is shown of the implementation of the repair 600 of the damaged portion 602 of an aircraft in accordance with the present disclosure. In this example, the first multi-ply composite hat-shaped section 606 includes two single-ply hat-shaped sections 606a and 606b bonded together with adhesive the second multi-ply composite hat-shaped section 608 includes four single-ply hat-shaped sections 608a, 608b, 608c, and 608d bonded together with adhesive, and third multi-ply composite hat-shaped section 610 includes two single-ply hat-shaped sections 610a and 610b bonded together with adhesive. Similarly, the first multi-ply composite doubler 614 includes four flat doublers 614a, 614b, 614c, and 614d bonded together with adhesive, second multi-ply composite doubler 616 includes four flat doublers 616a, 616b, 616c, and 616d bonded together with adhesive, first multi-ply composite splice plate 618 includes four flat doublers 618a, 618b, 618c, and 618d bonded together with adhesive, and second multi-ply composite splice plate 620 includes four flat doublers 620a, 620b, 620c, and 620d bonded together with adhesive.

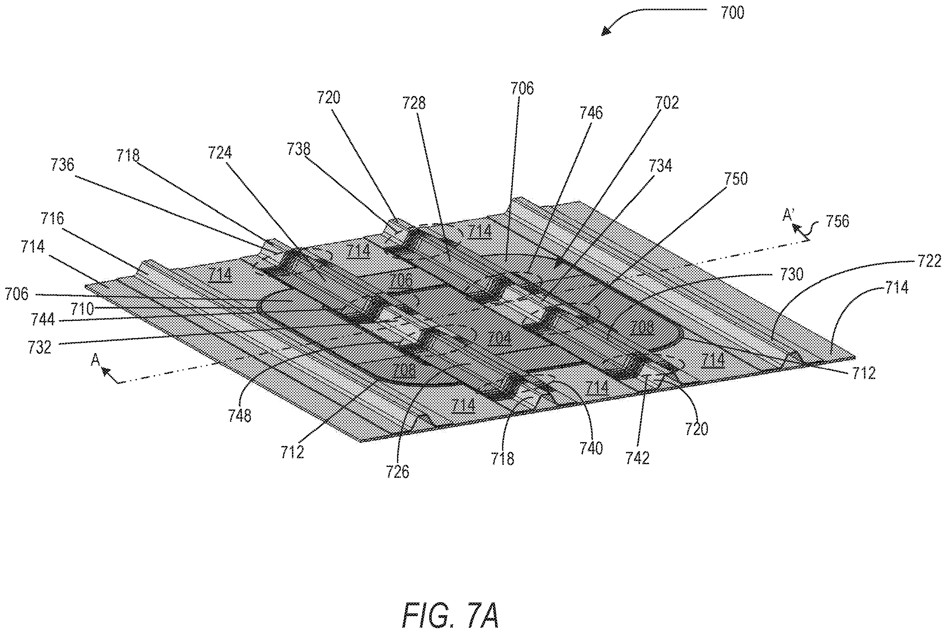

In FIG. 7A, a prospective assembly view is shown of an example of another implementation of the repair 700 of a damaged portion 702 of an aircraft in accordance with the present disclosure. In this example, a multi-ply composite repair skin 704 is shown placed in the inside of the damaged portion 702. The multi-ply composite repair skin 704 is held in place by a plurality of multi-ply composite splice plates 706 and 708 either via bonding adhesive or attachment bolts. The plurality of multi-ply composite splice plates 706 and 708 are stacked up on and attached to (via adhesive bonding) to a plurality of multi-ply composite doublers 710 and 712. As described earlier, the plurality of multi-ply composite doublers 710 and 712 are located at the periphery of the multi-ply composite repair skin 704 and are attached to the skin 714 of a composite fuselage or wing having a plurality of support stringers 716, 718, 720, and 722. The repair 700 also include a plurality of multi-ply composite hat-shaped sections 724, 726, 728, and 730 acting as splice stringers and a plurality of multi-ply composite hat-shaped sections 732 and 734 acting as restoration stringers. The repair may also include a plurality of multi-ply composite hat-shaped sections 736, 738, 740, and 742 acting a stringer doublers and the plurality of multi-ply composite hat-shaped sections 724, 726, 728, and 730 may have a staggered trim 744, 746, 748, and 750 at the interface of the multi-ply composite hat-shaped sections 736, 738, 740, and 742 and the plurality of multi-ply composite hat-shaped sections 732 and 734.

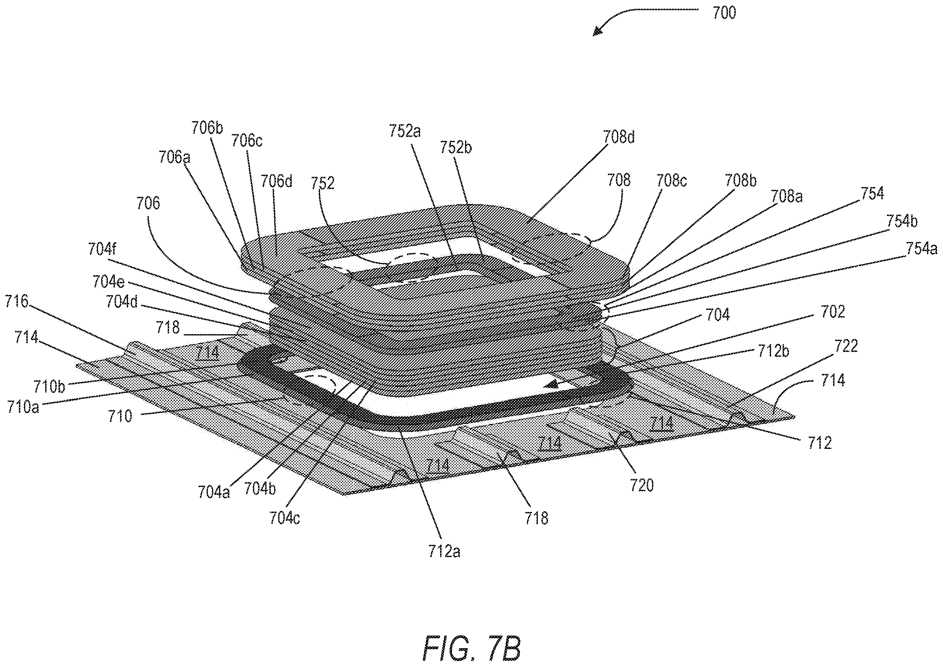

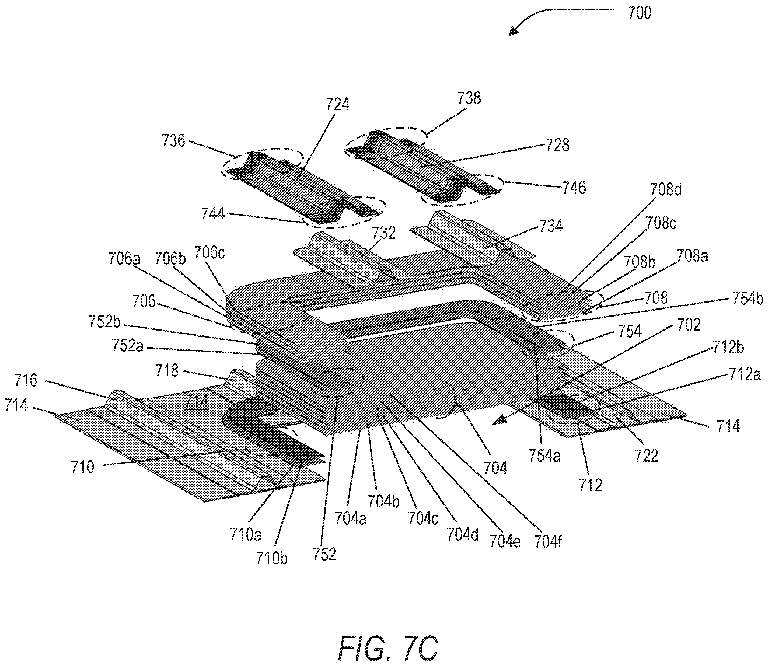

In FIG. 7B, an exploded assembly view is shown of the implementation of the repair 700 of the damaged portion 702 in accordance with the present disclosure. For the purpose of illustration simplicity the plurality of multi-ply composite hat-shaped sections 724, 726, 728, 730, 732 and 734 are not shown and the support stringers 716 and 718 are shown as damaged at the damaged portion 702. In this example, the plurality of multi-ply composite doublers 710 and 712 are shown to include flat doublers 710a, 710b, 712a, and 712b, respectively. The multi-ply composite repair skin 704 include single-ply repair skins 704a, 704b, 704c, 704d, 704e, and 704f. The plurality of multi-ply composite splice plates 706 and 708 include single-ply splice plates 706a, 706b, 706c, 706d, 708a, 708b, 708c, and 708d, respectively, and the plurality of multi-ply composite doublers 710, 712, 750, and 752 include flat doublers 710a, 710b, 712a, 712b, 752a, 752b, 754a, and 754b, respectively. Turning to FIG. 7C, an exploded assembly cut-view is shown of the implementation of the repair 700 of the damaged portion 702 in accordance with the present disclosure. The cut-view is along plane AA' 756. In this example, the plurality of multi-ply composite hat-shaped sections 724, 728, 732 and 734 are shown.

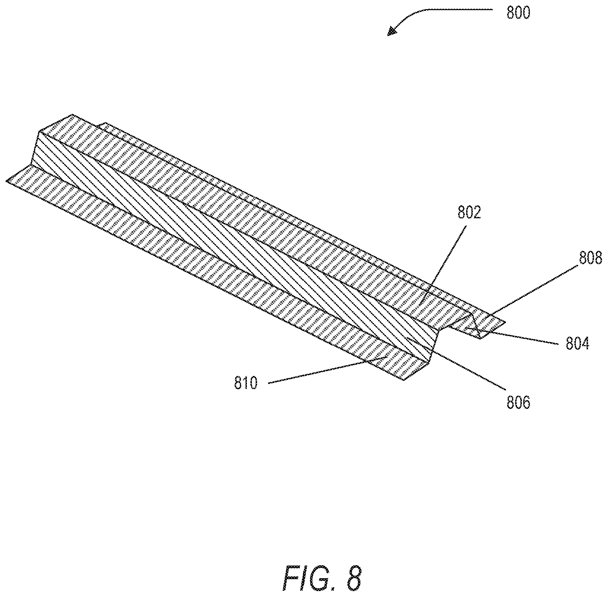

In FIG. 8, a perspective view is shown of an example of an implementation of a single-ply hat-shaped section 800 in accordance with the present disclosure. The single-ply hat-shaped section 800 includes a top surface 802, a first side surface 804, a second side surface 806, a first bottom surface 808, and a second bottom surface 810.

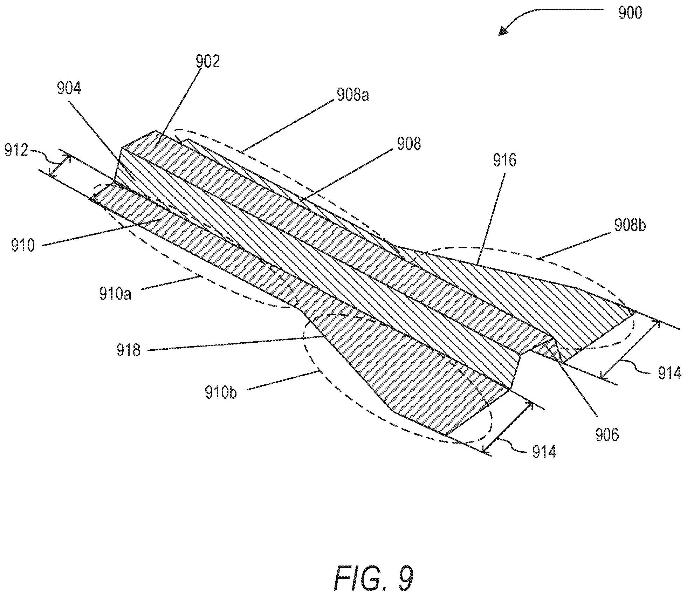

In FIG. 9, a perspective view of an example of another implementation of a single-ply hat-shaped section 900 in accordance with the present disclosure. In this example, the single-ply hat-shaped section 900 also includes a top surface 902, a first side surface 904, a second side surface 906, a first bottom surface 908, and a second bottom surface 910. The first bottom surface 908 includes a first portion 908a that has a first width 912 and a second portion 908b that has a second width 914 and the second bottom surface 910 includes a first portion 910a that also has the first width 912 and a second portion 910b that has a second width 914. In this example, the second width 914 is greater than the first width 912.

The single-ply hat-shaped section 900 may be a standard nestable section from the composite repair kit or an end-user modified structure that has been trimmed to produce trimmed edges 916 and 918 of the second portions 908b and 910b between the first portions 908a and 910a and second portions 908b and 910b, respectively. A plurality of single-ply hat-shaped sections, similar to the example single-ply hat-shaped section 900, may be stacked up to produce a multi-ply hat-shaped section that has the shorter first length 912 of the combined first and second bottom surfaces.

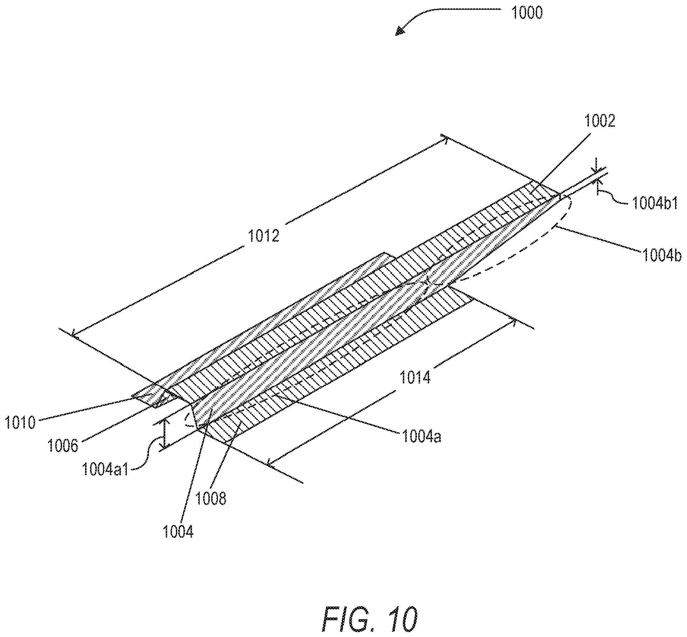

Turning to FIG. 10, a perspective view of an example of yet another implementation of a single-ply hat-shaped section 1000 is shown in accordance with the present disclosure. In this example, the single-ply hat-shaped section 1000 also includes a top surface 1002, a first side surface 1004, a second side surface 1006, a first bottom surface 1008, and a second bottom surface 1010. The first side surface 1004 has a first length 1012 (i.e., the length of the first side surface 1004) and includes a first portion 1004a that has a first width 1004a1 and a second portion 1004b that has a second width 1004b1. In this example, the first width 1004a1 in the first portion 1004a is greater than the second width 1004b1 in the second portion 1004b. Moreover, the first and second bottom surfaces 1008 and 1010 have a second length 1014 (i.e., the length of both the first and second bottom surfaces 1008) that is less than the first length 1012.

The single-ply hat-shaped section 1000 may be a standard nestable section from the composite repair kit or an end-user modified structure that has been trimmed to produce a trimmed edge 1016 of the second portion 1004b and the shorter second length 1014 of the first bottom surface 1008 and second bottom surface 1010. As described earlier, a plurality of single-ply hat-shaped sections (similar to the example single-ply hat-shaped section 1000) may be stacked up to produce a multi-ply hat-shaped section that has the shorter second length 1014 of the combined first and second bottom surfaces.

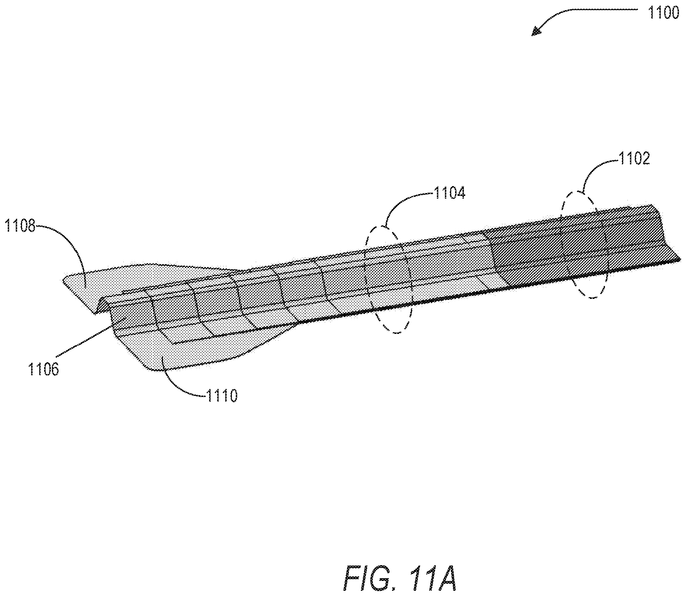

In FIG. 11A, an assembly view is shown of an example of an implementation of multi-ply hat-shaped section 1100 in accordance with the present disclosure. In this example, the multi-ply hat-shaped section 1100 includes a first portion 1102 and second portion 1104. Both the first and second portions 1102 and 1104 include a plurality of single-ply hat-shaped sections that each include a top surface, a first side surface, a second side surface, a first bottom surface, and a second bottom surface; however, the bottom single-ply hat-shaped section 1106 of the second portion 1104 includes a first and second bottom surfaces 1108 and 1110 that are similar to the ones described in the example shown in FIG. 9.

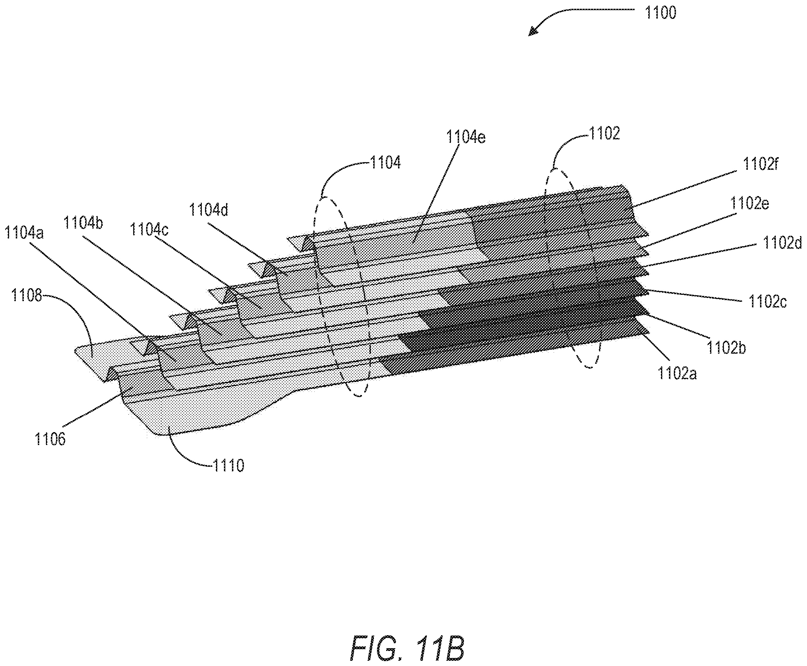

In FIG. 11B, an exploded assembly view is shown of the implementation of the multi-ply hat-shaped section 1100 in accordance with the present disclosure. The first portion 1102 of the multi-ply hat-shaped section 1100 includes a plurality of single-ply hat-shaped sections 1102a, 1102b, 1102c, 1102d, 1102e, and 1102f and the second portion 1104 includes a plurality of single-ply hat-shaped sections that has the bottom single-ply hat-shaped section 1106 and single-ply hat-shaped sections 1104a, 1104b, 1104c, 1104d, and 1104e.

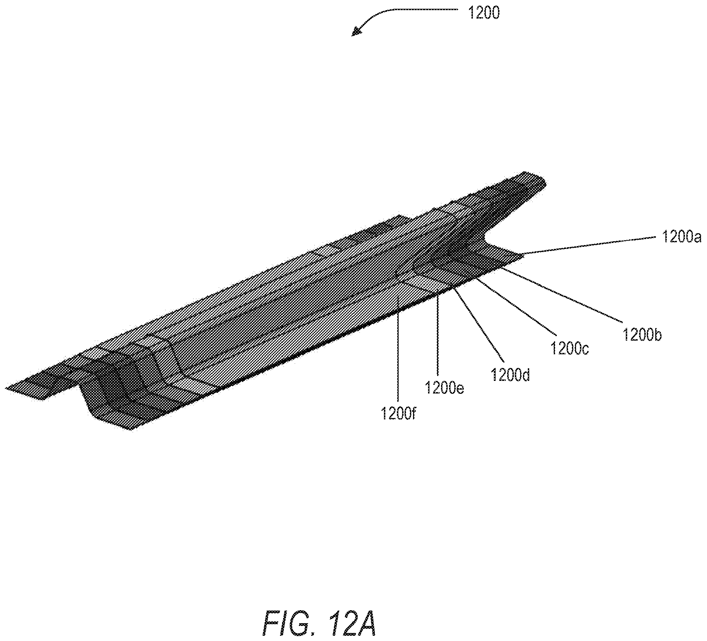

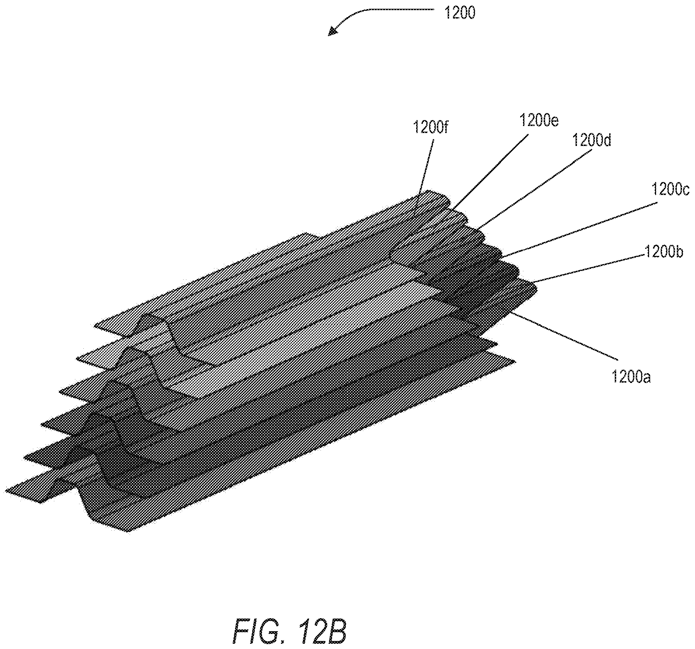

Turing to FIG. 12A, an assembly view is shown of an example of another implementation of a multi-ply hat-shaped section 1200 in accordance with the present disclosure. In this example, the multi-ply hat-shaped section 1200 includes a plurality of single-ply hat-shaped sections 1200a, 1200b, 1200c, 1200d, 1200e, and 1200f stacked up in a staggered manner and nested on top of each other. In FIG. 12B, an exploded assembly view is shown of the implementation of a multi-ply hat-shaped section 1200 in accordance with the present disclosure.

As described earlier, the multi-ply hat-shaped sections 1100 and 1200 are formed by bonding the individual single-ply hat-shaped sections 1102a, 1102b, 1102c, 1102d, 1102e, 1102f, 1104a, 1104b, 1104c, 1104d, 1104e, 1106, 1200a, 1200b, 1200c, 1200d, 1200e, and 1200f, respectively. Similar to the example shown in FIG. 5, some of the individual single-ply hat-shaped sections 1102a, 1102b, 1102c, 1102d, 1102e, 1102f, 1104a, 1104b, 1104c, 1104d, 1104e, 1106, 1200a, 1200b, 1200c, 1200d, 1200e, and 1200f may include splits (not shown) in the top surfaces to allow single-ply hat-shaped sections of the same shape and size to fit and be nested between varying layers of single-ply hat-shaped sections. As before, to ensure acceptable bonding surfaces in the field, a peal-ply may be added to each surface of the single-ply hat-shaped sections 1102a, 1102b, 1102c, 1102d, 1102e, 1102f, 1104a, 1104b, 1104c, 1104d, 1104e, 1106, 1200a, 1200b, 1200c, 1200d, 1200e, and 1200f and removed prior to bonding.

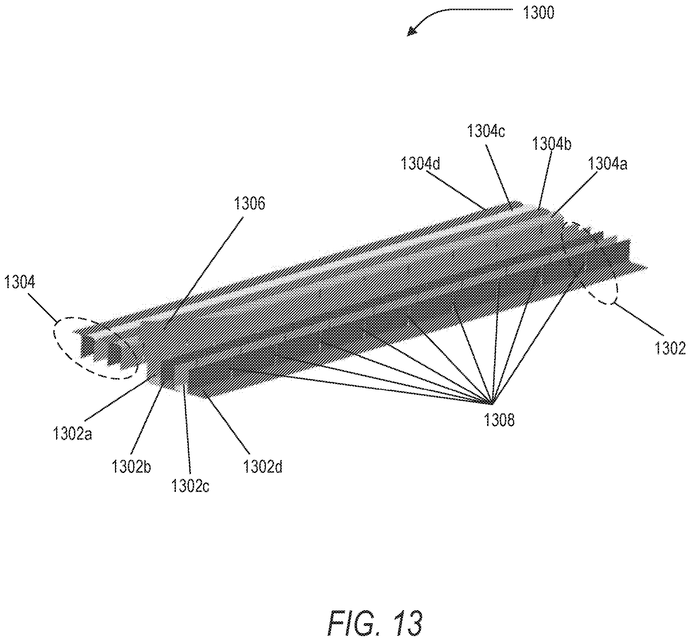

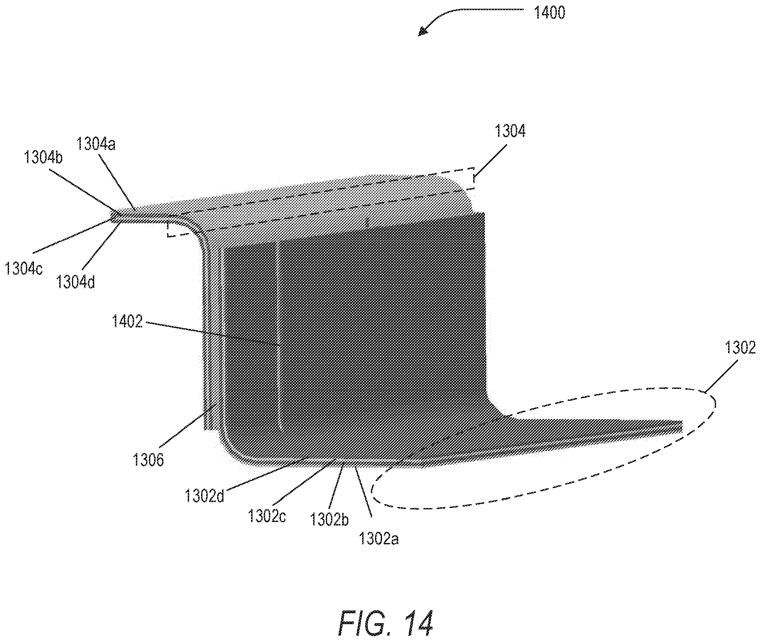

In FIG. 13, an exploded assembly view is shown of an example of an implementation of a multi-ply structural element 1300 in accordance with the present disclosure. In this example, the multi-ply structural element 1300 may be a "Z-shaped" element because it will have a Z-shape when bonded and cured. In this example, the multi-ply structural element 1300 includes a first portion 1302 and second portion 1304 that include a plurality of single-ply nestable sections 1302a, 1302b, 1302c, 1302d, 1304a, 1304b, 1304c, and 1304d, respectively. The single-ply nestable sections 1302a, 1302b, 1302c, 1302d, 1304a, 1304b, 1304c, and 1304d may be long and narrow strips that are bent into an "L-shape," where the orientation of the L-shape is in a first direction for the single-ply nestable sections 1302a, 1302b, 1302c, and 1302d of the first portion 1302 and in an opposite direction for the single-ply nestable sections 1304a, 1304b, 1304c, and 1304d of the second portion 1304. When bonded together with adhesive, the combined structure forms the multi-ply structural element 1300 having a Z-shape. In addition, an additional single-ply nestable section 1306 may be bonded between the first portion 1302 and the second portion 1304 at the single-ply nestable sections 1302a and 1304a to add thickness, strength, or both. Moreover, in order to form the multi-ply structural element 1300 that has complex contours, relief cuts 1308 may be cut into the plurality of single-ply nestable sections 1302a, 1302b, 1302c, 1302d, 1304a, 1304b, 1304c, and 1304d, respectively. It is appreciated that for the purposes of ease of illustration, the relief cuts 1308 are shown only on the single-ply nestable section 1302d; however, if present the relief cuts 1308 will also be within the other single-ply nestable sections 1302a, 1302b, 1302c, 1304a, 1304b, 1304c, and 1304d. In FIG. 14, a zoomed in assembly view of the implementation of the multi-ply structural element 1300 is shown. In this example, a portion 1400 of the multi-ply structural element 1300 is shown with one relief cut 1402 of the plurality of relief cuts 1308 shown in FIG. 13. As before, the single-ply nestable sections 1302a, 1302b, 1302c, 1302d, 1304a, 1304b, 1304c, 1304d, and 1306 are bonded together with adhesive to form a nested structure.

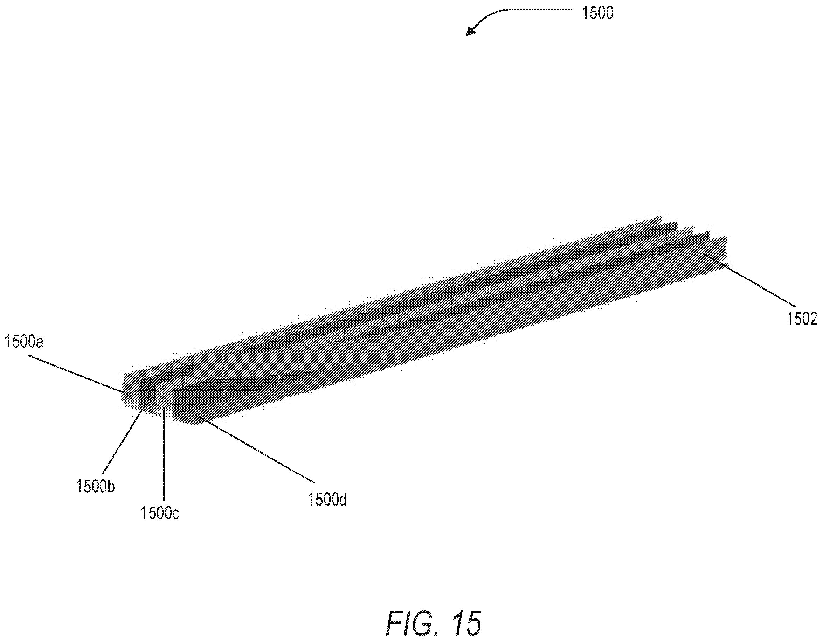

Turning to FIG. 15, an exploded assembly view of an example of another implementation of a multi-ply structural element 1500 is shown in accordance with the present disclosure. In this example, the multi-ply structural element 1500 forms an "L-shaped" element that may be similar to the first portion 1302 of the multi-ply structural element 1300 shown in FIGs. 13 and 14. The multi-ply structural element 1500 includes single-ply nestable sections 1500a, 1500b, 1500c, and 1500d that are long and narrow strips that are bent into an L-shape. Moreover, in this example, an additional single-ply nestable section 1502 is bonded to the outer single-ply nestable section 1500d.

It is appreciated by those of ordinary skill in the art that while the composite repair kit is described as being utilized for repair and restoration of a damaged structure (i.e., the damaged portion), the composite repair kit may also be utilized create new original structures (e.g., curved stringers). The composite repair kit also enables simple tooling to create complex shaped parts.

It will be understood that various aspects or details described above may be changed without departing from the scope of the claims. Furthermore, the foregoing description is for the purpose of illustration only, and not for the purpose of limitation. Modifications and variations are possible in light of the above description or may be acquired from practicing the method for repairing a damaged portion of a composite fuselage or wing on an aircraft. The flowchart and block diagrams in the different depicted example of implementations illustrate the architecture, functionality, and operation of some possible implementations of apparatuses and methods in an illustrative example. In this regard, each block in the flowchart or block diagrams may represent a module, a segment, a function, a portion of an operation or step, some combination thereof.

In some alternative examples of implementations, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram

## Claims

1. A method (200) for repairing a damaged portion (302, 602, 702) of a composite fuselage or wing on an aircraft, the method (200) comprising:
performing (204) a non-destructive inspection ("NDI") of the damaged portion (302, 602, 702) to determine a size and a location of the damaged portion (302, 602, 702);
determining (206) a repair (600) for the damaged portion (302, 602, 702) based on the size and location of the damaged portion (302, 602, 702) and on types of previously fabricated nestable sections in a composite repair kit; and
repairing (212) the damaged portion (302, 602, 702) with the composite repair kit;
wherein each previously fabricated nestable section (320, 322, 324, 326, 328, 330, 332, 334) of the previously fabricated nestable sections in the composite repair kit is a single-ply of composite material that is fabricated prior to being included in the composite repair kit; and
wherein the previously fabricated nestable sections are constructed to be stacked with each other to form varying multi-ply composite structures (606, 608, 610, 614, 616, 618, 620).

2. The method (200) of claim 1, wherein determining (206) a repair (600) includes
analyzing the damaged portion (302, 602, 702) and
designing a repair solution for the damaged portion (302, 602, 702) utilizing the composite repair kit.

3. The method (200) of claim 1 or 2, wherein repairing (212) the damaged portion (302, 602, 702) with the composite repair kit includes
utilizing a plurality of the previously fabricated nestable sections (320, 322, 324, 326, 328, 330, 332, 334) of the composite repair kit to repair (600) the damaged portion (302, 602, 702), wherein the plurality of previously fabricated nestable sections include previously fabricated nestable sections of varying physical shapes to repair (600) the damaged portion (302, 602, 702), and
applying an adhesive (400) to attach a first previously fabricated nestable section to a second previously fabricated nestable section at the location of the damaged portion (302, 602, 702) on the aircraft.

4. The method (200) of claim 3, wherein the plurality of previously fabricated nestable sections are cured at the location of the damaged portion on the aircraft.

5. The method (200) of claim 3 or 4,
wherein the plurality of previously fabricated nestable sections includes at least one repair skin, a plurality of flat doublers (310, 620a, 620b, 620c, 620d, 710a, 710b, 712a, 712b, 752a, 752b, 754a, 754b), and a plurality of single-ply splice plates (706a, 706b, 706c, 706d, 708a, 708b, 708c, 708d),
wherein repairing (212) the damaged portion (302, 602, 702) includes internally placing the at least one repair skin over the damaged portion (302, 602, 702), wherein the damaged portion (302, 602, 702) includes a damaged portion (302, 602, 702) of a skin of the composite fuselage or wing,
placing the plurality of flat doublers (310, 620a, 620b, 620c, 620d, 710a, 710b, 712a, 712b, 752a, 752b, 754a, 754b) around a periphery (624) of the at least one repair skin in a staggered and stacked manner to match a thickness of the at least one repair skin to a thickness of the skin of the composite fuselage or wing at the damaged portion (302, 602, 702), and
placing the plurality of single-ply splice plates over the plurality of flat doublers (310, 620a, 620b, 620c, 620d, 710a, 710b, 712a, 712b, 752a, 752b, 754a, 754b) and at least one repair skin in a staggered manner, wherein the splice plates (706a, 706b, 706c, 706d, 708a, 708b, 708c, 708d) join the plurality of flat doublers (310, 620a, 620b, 620c, 620d, 710a, 710b, 712a, 712b, 752a, 752b, 754a, 754b) and repair skin together.

6. The method (200) of claim 5,
wherein the at least one repair skin (604) is a plurality (624) of repair skins and
wherein placing the at least one repair skin (604) over the damaged portion (302, 602, 702) includes
applying adhesive (400) between the plurality of repair skins and
stacking up the plurality of repair skins to form a multi-ply composite repair skin (704) that is internally placed over the damaged portion (302, 602, 702).

7. The method (200) of claim 6, further including curing the multi-ply composite repair skin (704) cured at the location of the damaged portion (302, 602, 702) on the aircraft.

8. The method (200) of any of claims 5-7, wherein placing the plurality of flat doublers (310, 620a, 620b, 620c, 620d, 710a, 710b, 712a, 712b, 752a, 752b, 754a, 754b) around the periphery (624) of the at least one repair skin (604) includes
applying adhesive (400) between the plurality of flat doublers (310, 620a, 620b, 620c, 620d, 710a, 710b, 712a, 712b, 752a, 752b, 754a, 754b),
stacking the plurality of flat doublers (310, 620a, 620b, 620c, 620d, 710a, 710b, 712a, 712b, 752a, 752b, 754a, 754b) in a staggered manner to form a multi-ply composite doubler (710, 712, 750, 752), wherein stacking the plurality of flat doublers (310, 620a, 620b, 620c, 620d, 710a, 710b, 712a, 712b, 752a, 752b, 754a, 754b) also includes matching the thickness of the at least one repair skin (604) to the thickness of the skin of the composite fuselage or wing at the damaged portion (302, 602, 702) , and
curing the multi-ply composite doubler (710, 712, 750, 752) on the aircraft at the location of the damaged portion (302, 602, 702).

9. The method (200) of any of claims 5-8, wherein placing the plurality of single-ply splice plates (706a, 706b, 706c, 706d, 708a, 708b, 708c, 708d) over the plurality of flat doublers (310, 620a, 620b, 620c, 620d, 710a, 710b, 712a, 712b, 752a, 752b, 754a, 754b) and the at least one repair skin (604) includes
applying adhesive (400) between the plurality of single-ply splice plates (706a, 706b, 706c, 706d, 708a, 708b, 708c, 708d),
stacking the plurality of single-ply splice plates (706a, 706b, 706c, 706d, 708a, 708b, 708c, 708d) to form a multi-ply composite splice plate (618, 620), and
curing the multi-ply composite splice plate (618, 620) on the aircraft at the location of the damaged portion (302, 602, 702).

10. The method (200) of any of claims 3-9,
wherein the plurality of previously fabricated nestable sections further includes a plurality of single-ply hat-shaped sections (608a, 608b, 608c, 608d),
wherein repairing the damage portion (302, 602, 702) includes
applying adhesive (400) between the plurality of single-ply hat-shaped sections (608a, 608b, 608c, 608d),
stacking the plurality of single-ply hat-shaped sections (608a, 608b, 608c, 608d) to form a multi-ply composite hat-shaped section (320, 322, 324, 326, 328, 330, 332, 334, 610a, 610b), and
curing the multi-ply composite hat-shaped section (320, 322, 324, 326, 328, 330, 332, 334, 610a, 610b) on the aircraft at the location of the damaged portion (302, 602, 702).

11. The method (200) of claim 10, further including applying a release film at a bottom single-ply hat-shaped section prior to curing the multi-ply composite hat-shaped section.

12. The method (200) of claim 10 or 11,
wherein each of the single-ply hat-shaped sections (608a, 608b, 608c, 608d) includes a top surface, a first side surface, a second side surface, a first bottom surface, and a second bottom surface,
wherein the first bottom surface includes a first portion that has a first width and a second portion that has a second width, and
wherein one of the single-ply hat-shaped sections (608a, 608b, 608c, 608d) is a wide-bottom single-ply hat-shaped section that has the second width that is greater than the first width,
wherein stacking the plurality of single-ply hat-shaped sections (608a, 608b, 608c, 608d) to form the multi-ply composite hat-shaped section (320, 322, 324, 326, 328, 330, 332, 334, 610a, 610b) includes stacking the plurality of single-ply hat-shaped sections (608a, 608b, 608c, 608d) such that the wide-bottom single-ply hat-shaped section is at a bottom of the multi-ply composite hat-shaped section.

13. The method (200) of any of claims 10-12, wherein the plurality of single-ply hat-shaped sections (320, 322, 324, 326, 328, 330, 332, 334, 610a, 610b) are constructed to bridge an edge of a stringer position over the repair skin.

14. The method (200) of any of claims 3-13, wherein repairing the damaged portion with the composite repair kit includes applying adhesive between at least three previously fabricated nestable sections of the plurality of the previously fabricated nestable sections, and combining the at least three previously fabricated nestable sections to form a structural element for use in the aircraft.

15. The method (200) of claim 14, wherein the structural element for use in the aircraft is a stringer.

## Patentansprüche

1. Verfahren (200) zum Reparieren eines beschädigten Abschnitts (302, 602, 702) eines Rumpfes oder Flügels aus Verbundwerkstoff an einem Flugzeug, wobei das Verfahren (200) umfasst:
Durchführen (204) einer zerstörungsfreien Inspektion ("NDI") des beschädigten Abschnitts (302, 602, 702), um eine Größe und einen Ort des beschädigten Abschnitts (302, 602, 702) zu bestimmen;
Bestimmen (206) einer Reparatur (600) für den beschädigten Abschnitt (302, 602, 702) auf der Grundlage der Größe und der Lage des beschädigten Abschnitts (302, 602, 702) und der Typen von vorgefertigten verschachtelbaren Abschnitten in einem Verbundwerkstoff- Reparatursatz; und
Reparieren (212) des beschädigten Abschnitts (302, 602, 702) mit dem Verbundwerkstoff-Reparatursatz;
wobei jeder vorgefertigte verschachtelbare Abschnitt (320, 322, 324, 326, 328, 330, 332, 334) der vorgefertigten verschachtelbaren Abschnitte in dem Verbundwerkstoff-Reparatursatz eine vor der Aufnahme in den Verbundwerkstoff-Reparatursatz gefertigte Einzellage aus Verbundwerkstoff ist; und
wobei die vorgefertigten verschachtelbaren Abschnitte so konstruiert sind, dass sie aufeinander stapelbar sind, um unterschiedliche mehrlagige Verbundstrukturen (606, 608, 610, 614, 616, 618, 620) zu bilden.

2. Verfahren (200) nach Anspruch 1, bei dem das Bestimmen (206) einer Reparatur (600) das Analysieren des beschädigten Abschnitts (302, 602, 702) und das Entwerfen einer Reparaturlösung für den beschädigten Abschnitt (302, 602, 702) unter Verwendung des Verbundwerkstoff-Reparatursatzes umfasst.

3. Verfahren (200) nach Anspruch 1 oder 2, bei dem das Reparieren (212) des beschädigten Abschnitts (302, 602, 702) mit dem Verbundwerkstoff- Reparatursatz umfasst:
Verwenden einer Mehrzahl der vorgefertigten verschachtelbaren Abschnitte (320, 322, 324, 326, 328, 330, 332, 334) des Verbundwerkstoff-Reparatursatzes zum Reparieren (600) des beschädigten Abschnitts (302, 602, 702), wobei die Mehrzahl der vorgefertigten verschachtelbaren Abschnitte vorgefertigte verschachtelbare Abschnitte mit unterschiedlichen körperlichen Formen zum Reparieren (600) des beschädigten Abschnitts (302, 602, 702) umfasst, und
Auftragen eines Klebstoffs (400) zum Befestigen eines ersten vorgefertigten verschachtelbaren Abschnitts an einem zweiten vorgefertigten verschachtelbaren Abschnitt an der Stelle des beschädigten Abschnitts (302, 602, 702) am Flugzeug.

4. Verfahren (200) nach Anspruch 3, bei dem die Mehrzahl von vorgefertigten verschachtelbaren Abschnitten am Ort des beschädigten Abschnitts des Flugzeugs ausgehärtet wird.

5. Verfahren (200) nach Anspruch 3 oder 4,
bei dem die Mehrzahl von vorgefertigten verschachtelbaren Abschnitten mindestens eine Reparaturhaut, eine Mehrzahl von flachen Dopplern (310, 620a, 620b, 620c, 620d, 710a, 710b, 712a, 712b, 752a, 752b, 754a, 754b) und eine Mehrzahl von einlagigen Spleißplatten (706a, 706b, 706c, 706d, 708a, 708b, 708c, 708d) umfasst,
bei dem das Reparieren (212) des beschädigten Abschnitts (302, 602, 702) umfasst:
internes Anbringen der mindestens einen Reparaturhaut über dem beschädigten Abschnitt (302, 602, 702), wobei der beschädigte Abschnitt (302, 602, 702) einen beschädigten Abschnitt (302, 602, 702) einer Haut des Verbundrumpfs oder - flügels umfasst,
Anordnen der Mehrzahl von flachen Dopplern (310, 620a, 620b, 620c, 620d, 710a, 710b, 712a, 712b, 752a, 752b, 754a, 754b) um einen Rand (624) der mindestens einen Reparaturhaut in versetzter und gestapelter Weise, um eine Dicke der mindestens einen Reparaturhaut an eine Dicke der Haut des Verbundrumpfes oder -flügels an dem beschädigten Abschnitt (302, 602, 702) anzupassen, und
Anordnen der Mehrzahl von einlagigen Spleißplatten über der Mehrzahl von flachen Dopplern (310, 620a, 620b, 620c, 620d, 710a, 710b, 712a, 712b, 752a, 752b, 754a, 754b) und mindestens einer Reparaturhaut in versetzter Weise, wobei die Spleißplatten (706a, 706b, 706c, 706d, 708a, 708b, 708c, 708d) die Mehrzahl von flachen Dopplern (310, 620a, 620b, 620c, 620d, 710a, 710b, 712a, 712b, 752a, 752b, 754a, 754b) und die Reparaturhaut miteinander verbinden.

6. Verfahren (200) nach Anspruch 5,
bei dem die mindestens eine Reparaturhaut (604) eine Mehrzahl (624) von Reparaturhäuten ist und
bei dem das Anbringen der mindestens einen Reparaturhaut (604) über dem beschädigten Abschnitt (302, 602, 702) umfasst:
Auftragen von Klebstoff (400) zwischen der Mehrzahl von Reparaturhäuten und
Aufstapeln der Mehrzahl von Reparaturhäuten, um eine mehrlagige Verbund-Reparaturhaut (704) zu bilden, die intern über dem beschädigten Abschnitt (302, 602, 702) angeordnet wird.

7. Verfahren (200) nach Anspruch 6, das ferner umfasst:
Aushärten der mehrlagigen Verbund-Reparaturhaut (704), ausgehärtet an der Stelle des beschädigten Abschnitts (302, 602, 702) am Flugzeug.

8. Verfahren (200) nach einem der Ansprüche 5 bis 7, bei dem das Platzieren der Mehrzahl von flachen Dopplern (310, 620a, 620b, 620c, 620d, 710a, 710b, 712a, 712b, 752a, 752b, 754a, 754b) um den Rand (624) der mindestens einen Reparaturhaut (604) umfasst:
Auftragen von Klebstoff (400) zwischen der Mehrzahl von flachen Dopplern (310, 620a, 620b, 620c, 620d, 710a, 710b, 712a, 712b, 752a, 752b, 754a, 754b),
Stapeln der Mehrzahl von flachen Dopplern (310, 620a, 620b, 620c, 620d, 710a, 710b, 712a, 712b, 752a, 752b, 754a, 754b) in versetzter Weise, um einen mehrlagigen Verbunddoppler (710, 712, 750, 752) zu bilden, wobei das Stapeln der Mehrzahl von flachen Dopplern (310, 620a, 620b, 620c, 620d, 710a, 710b, 712a, 712b, 752a, 752b, 754a, 754b) auch das Anpassen der Dicke der mindestens einen Reparaturhaut (604) an die Dicke der Haut des Verbundrumpfes oder -flügels an dem beschädigten Abschnitt (302, 602, 702) umfasst, und
Aushärten des mehrlagigen Verbunddopplers (710, 712, 750, 752) am Flugzeug an der Stelle des beschädigten Abschnitts (302, 602, 702).

9. Verfahren (200) nach einem der Ansprüche 5 bis 8, bei dem das Platzieren der Mehrzahl von einlagigen Spleißplatten (706a, 706b, 706c, 706d, 708a, 708b, 708c, 708d) über der Mehrzahl von flachen Dopplern (310, 620a, 620b, 620c, 620d, 710a, 710b, 712a, 712b, 752a, 752b, 754a, 754b) und der mindestens einen Reparaturhaut (604) umfasst:
Auftragen von Klebstoff (400) zwischen der Mehrzahl von einlagigen Spleißplatten (706a, 706b, 706c, 706d, 708a, 708b, 708c, 708d),
Stapeln der Mehrzahl von einlagigen Spleißplatten (706a, 706b, 706c, 706d, 708a, 708b, 708c, 708d), um eine mehrlagige Verbundspleißplatte (618, 620) zu bilden, und
Aushärten der mehrlagigen Verbundspleißplatte (618, 620) an dem Flugzeug an der Stelle des beschädigten Abschnitts (302, 602, 702).

10. Verfahren (200) nach einem der Ansprüche 3-9,
bei dem die Mehrzahl von vorgefertigten verschachtelbaren Abschnitten ferner eine Mehrzahl von einlagigen hutförmigen Abschnitten (608a, 608b, 608c, 608d) umfasst,
wobei das Reparieren des beschädigten Abschnitts (302, 602, 702) umfasst:
Auftragen von Klebstoff (400) zwischen der Mehrzahl von einlagigen hutförmigen Abschnitten (608a, 608b, 608c, 608d),
Stapeln der Mehrzahl von einlagigen hutförmigen Abschnitten (608a, 608b, 608c, 608d), um einen mehrlagigen hutförmigen Verbundabschnitt (320, 322, 324, 326, 328, 330, 332, 334, 610a, 610b) zu bilden, und
Aushärten des mehrlagigen hutförmigen Verbundabschnitts (320, 322, 324, 326, 328, 330, 332, 334, 610a, 610b) auf dem Flugzeug am Ort des beschädigten Abschnitts (302, 602, 702).

11. Verfahren (200) nach Anspruch 10, das ferner das Aufbringen einer Trennfolie an einem unteren einlagigen hutförmigen Abschnitt vor dem Aushärten des mehrlagigen hutförmigen Verbundabschnitts umfasst.

12. Verfahren (200) nach Anspruch 10 oder 11,
bei dem jeder der einlagigen hutförmigen Abschnitte (608a, 608b, 608c, 608d) eine Oberseite, eine erste Seitenfläche, eine zweite Seitenfläche, eine erste Unterseite und eine zweite Unterseite aufweist,
wobei die erste Unterseite einen ersten Abschnitt mit einer ersten Breite und einen zweiten Abschnitt mit einer zweiten Breite aufweist, und
wobei einer der einlagigen hutförmigen Abschnitte (608a, 608b, 608c, 608d) ein einlagiger hutförmiger Abschnitt mit breitem Boden ist, bei dem die zweite Breite größer als die erste Breite ist,
wobei das Stapeln der Mehrzahl von einlagigen hutförmigen Abschnitten (608a, 608b, 608c, 608d), um den mehrlagigen hutförmigen Verbundabschnitt (320, 322, 324, 326, 328, 330, 332, 334, 610a, 610b) zu bilden, das Stapeln der Mehrzahl von einlagigen hutförmigen Abschnitten (608a, 608b, 608c, 608d) derart umfasst, dass der einlagige hutförmige Abschnitt mit breitem Boden an einer Unterseite des mehrlagigen hutförmigen Verbundabschnitts ist.

13. Verfahren (200) nach einem der Ansprüche 10-12, bei dem die Mehrzahl von einlagigen hutförmigen Abschnitten (320, 322, 324, 326, 328, 330, 332, 334, 610a, 610b) konstruiert sind, um eine Kante einer Stringerposition über der Reparaturhaut zu überbrücken.

14. Verfahren (200) nach einem der Ansprüche 3 bis 13, bei dem das Reparieren des beschädigten Abschnitts mit dem Verbundwerkstoff-Reparatursatz das Auftragen von Klebstoff zwischen mindestens drei vorgefertigten verschachtelbaren Abschnitten aus der Mehrzahl von vorgefertigten verschachtelbaren Abschnitten und das Kombinieren der mindestens drei vorgefertigten verschachtelbaren Abschnitte zur Bildung eines Strukturelements zur Verwendung im Flugzeug umfasst.

15. Verfahren (200) nach Anspruch 14, wobei das Strukturelement zur Verwendung in dem Flugzeug ein Stringer ist.

## Revendications

1. Procédé (200) pour réparer une partie détériorée (302, 602, 702) d'un fuselage ou d'une aile composite sur un aéronef, le procédé (200) comprenant les étapes consistant à :
effectuer (204) une inspection non destructive (« NDI ») de la partie détériorée (302, 602, 702) pour déterminer une taille et un emplacement de la partie détériorée (302, 602, 702) ;
déterminer (206) une réparation (600) pour la partie détériorée (302, 602, 702) sur la base de la taille et de l'emplacement de la partie détériorée (302, 602, 702) et de types de sections emboîtables fabriquées précédemment dans un kit de réparation composite ; et
réparer (212) la partie détériorée (302, 602, 702) à l'aide du kit de réparation composite ;
dans lequel chaque section emboîtable fabriquée précédemment (320, 322, 324, 326, 328, 330, 332, 334) des sections emboîtables fabriquées précédemment dans le kit de réparation composite est une couche unique de matériau composite qui est fabriquée avant d'être incluse dans le kit de réparation composite ; et
dans lequel les sections emboîtables fabriquées précédemment sont construites pour être empilées les unes avec les autres afin de former des structures composites multicouches variables (606, 608, 610, 614, 616, 618, 620).

2. Procédé (200) selon la revendication 1, dans lequel la détermination (206) d'une réparation (600) comprend les étapes consistant à
analyser la partie détériorée (302, 602, 702) et
concevoir une solution de réparation pour la partie détériorée (302, 602, 702) à l'aide du kit de réparation composite.

3. Procédé (200) selon la revendication 1 ou 2, dans lequel la réparation (212) de la partie détériorée (302, 602, 702) à l'aide du kit de réparation composite comprend les étapes consistant à
utiliser une pluralité de sections emboîtables fabriquées précédemment (320, 322, 324, 326, 328, 330, 332, 334) du kit de réparation composite pour réparer (600) la partie détériorée (302, 602, 702), dans lequel la pluralité de sections emboîtables fabriquées précédemment comprend des sections emboîtables fabriquées précédemment de formes physiques variables pour réparer (600) la partie détériorée (302, 602, 702), et
appliquer un adhésif (400) pour fixer une première section emboîtable fabriquée précédemment à une seconde section emboîtable fabriquée précédemment au niveau de l'emplacement de la partie détériorée (302, 602, 702) sur l'aéronef.

4. Procédé (200) selon la revendication 3, dans lequel la pluralité de sections emboîtables fabriquées précédemment sont durcies au niveau de l'emplacement de la partie détériorée sur l'aéronef.

5. Procédé (200) selon la revendication 3 ou 4,
dans lequel la pluralité de sections emboîtables fabriquées précédemment comprend au moins une peau de réparation, une pluralité de renforts plats (310, 620a, 620b, 620c, 620d, 710a, 710b, 712a, 712b, 752a, 752b, 754a, 754b), et une pluralité de plaques d'épissure monocouches (706a, 706b, 706c, 706d, 708a, 708b, 708c, 708d),
dans lequel la réparation (212) de la partie détériorée (302, 602, 702) comprend le placement interne de la au moins une peau de réparation sur la partie détériorée (302, 602, 702), dans lequel la partie détériorée (302, 602, 702) comprend une partie détériorée (302, 602, 702) d'une peau du fuselage ou de l'aile composite,
placer la pluralité de renforts plats (310, 620a, 620b, 620c, 620d, 710a, 710b, 712a, 712b, 752a, 752b, 754a, 754b) autour d'une périphérie (624) de la au moins une peau de réparation de manière étagée et empilée pour faire correspondre une épaisseur de la au moins une peau de réparation à une épaisseur de la peau du fuselage ou de l'aile composite au niveau de la partie détériorée (302, 602, 702), et
placer la pluralité de plaques d'épissure monocouches sur la pluralité de renforts plats (310, 620a, 620b, 620c, 620d, 710a, 710b, 712a, 712b, 752a, 752b, 754a, 754b) et au moins une peau de réparation de manière étagée, dans lequel les plaques d'épissure (706a, 706b, 706c, 706d, 708a, 708b, 708c, 708d) joignent la pluralité de renforts plats (310, 620a, 620b, 620c, 620d, 710a, 710b, 712a, 712b, 752a, 752b, 754a, 754b) et la peau de réparation ensemble.

6. Procédé (200) selon la revendication 5,
dans lequel la au moins une peau de réparation (604) est une pluralité (624) de peaux de réparation et
dans lequel le placement de la au moins une peau de réparation (604) sur la partie détériorée (302, 602, 702) comprend les étapes consistant à
appliquer de l'adhésif (400) entre la pluralité de peaux de réparation et
empiler la pluralité de peaux de réparation pour former une peau de réparation composite multicouche (704) qui est placée à l'intérieur sur la partie détériorée (302, 602, 702).

7. Procédé (200) selon la revendication 6, comprenant en outre le durcissement de la peau de réparation composite multicouche (704) durcie au niveau de l'emplacement de la partie détériorée (302, 602, 702) sur l'aéronef.

8. Procédé (200) selon l'une quelconque des revendications 5 à 7, dans lequel le placement de la pluralité de renforts plats (310, 620a, 620b, 620c, 620d, 710a, 710b, 712a, 712b, 752a, 752b, 754a, 754b) autour de la périphérie (624) de la au moins une peau de réparation (604) comprend les étapes consistant à
appliquer de l'adhésif (400) entre la pluralité de renforts plats (310, 620a, 620b, 620c, 620d, 710a, 710b, 712a, 712b, 752a, 752b, 754a, 754b),
empiler la pluralité de renfort plats (310, 620a, 620b, 620c, 620d, 710a, 710b, 712a, 712b, 752a, 752b, 754a, 754b) de manière étagée pour former un renfort composite multicouche (710, 712, 750, 752), dans lequel l'empilement de la pluralité de renforts plats (310, 620a, 620b, 620c, 620d, 710a, 710b, 712a, 712b, 752a, 752b, 754a, 754b) comprend également la mise en correspondance de l'épaisseur de la au moins une peau de réparation (604) à l'épaisseur de la peau du fuselage ou de l'aile composite au niveau de la partie détériorée (302, 602, 702), et
durcir le renfort composite multicouche (710, 712, 750, 752) sur l'aéronef au niveau de l'emplacement de la partie détériorée (302, 602, 702).

9. Procédé (200) selon l'une quelconque des revendications 5 à 8, dans lequel le placement de la pluralité de plaques d'épissure monocouches (706a, 706b, 706c, 706d, 708a, 708b, 708c, 708d) sur la pluralité de renforts plats (310, 620a, 620b, 620c, 620d, 710a, 710b, 712a, 712b, 752a, 752b, 754a, 754b) et la au moins une peau de réparation (604) comprend les étapes consistant à
appliquer de l'adhésif (400) entre la pluralité de plaques d'épissure monocouches (706a, 706b, 706c, 706d, 708a, 708b, 708c, 708d),
empiler la pluralité de plaques d'épissure monocouches (706a, 706b, 706c, 706d, 708a, 708b, 708c, 708d) pour former une plaque d'épissure composite multicouche (618, 620), et
durcir la plaque d'épissure composite multicouche (618, 620) sur l'aéronef au niveau de l'emplacement de la partie détériorée (302, 602, 702).

10. Procédé (200) selon l'une quelconque des revendications 3 à 9,
dans lequel la pluralité de sections emboîtables fabriquées précédemment comprend en outre une pluralité de sections en forme de chapeau monocouches (608a, 608b, 608c, 608d),
dans lequel la réparation de la partie détériorée (302, 602, 702) comprend les étapes consistant à
appliquer de l'adhésif (400) entre la pluralité de sections en forme de chapeau monocouches (608a, 608b, 608c, 608d),
empiler la pluralité de sections en forme de chapeau monocouches (608a, 608b, 608c, 608d) pour former une section en forme de chapeau composite multicouche (320, 322, 324, 326, 328, 330, 332, 334, 610a, 610b), et
durcir la section en forme de chapeau composite multicouche (320, 322, 324, 326, 328, 330, 332, 334, 610a, 610b) sur l'aéronef au niveau de l'emplacement de la partie détériorée (302, 602, 702).

11. Procédé (200) selon la revendication 10, comprenant en outre l'application d'un film anti-adhésif au niveau d'une section inférieure en forme de chapeau monocouche avant le durcissement de la section en forme de chapeau composite multicouche.

12. Procédé (200) selon la revendication 10 ou 11,
dans lequel chacune des sections en forme de chapeau monocouche (608a, 608b, 608c, 608d) comprend une surface supérieure, une première surface latérale, une seconde surface latérale, une première surface inférieure et une seconde surface inférieure,
dans lequel la première surface inférieure comprend une première partie qui présente une première largeur et une seconde partie qui présente une seconde largeur, et
dans lequel l'une des sections en forme de chapeau monocouches(608a, 608b, 608c, 608d) est une section en forme de chapeau monocouche à fond large qui présente la seconde largeur qui est supérieure à la première largeur,
dans lequel l'empilement de la pluralité de sections en forme de chapeau monocouches (608a, 608b, 608c, 608d) pour former la section en forme de chapeau composite multicouche (320, 322, 324, 326, 328, 330, 332, 334, 610a, 610b) comprend l'empilement de la pluralité de sections en forme de chapeau monocouche (608a, 608b, 608c, 608d) de telle sorte que la section en forme de chapeau monocouche à fond large soit au niveau d'un fond de la section en forme de chapeau composite multicouche.

13. Procédé (200) selon l'une quelconque des revendications 10 à 12, dans lequel la pluralité de sections en forme de chapeau monocouches (320, 322, 324, 326, 328, 330, 332, 334, 610a, 610b) sont construites pour ponter un bord d'une position de raidisseur au-dessus de la peau de réparation.

14. Procédé (200) selon l'une quelconque des revendications 3 à 13, dans lequel la réparation de la partie détériorée à l'aide du kit de réparation composite comprend l'application d'un adhésif entre au moins trois sections emboîtables fabriquées précédemment de la pluralité de sections emboîtables fabriquées précédemment, et la combinaison des au moins trois sections emboîtables fabriquées précédemment pour former un élément structurel à utiliser dans l'aéronef.

15. Procédé (200) selon la revendication 14, dans lequel l'élément structurel destiné à être utilisé dans l'avion est un raidisseur.
